# EUROPÄISCHE PATENTSCHRIFT

(11) **EP 2 999 904 B1**
(45) Veröffentlichungstag und Bekanntmachung des Hinweises auf die Patenterteilung: **06.12.2017**
(21) Anmeldenummer: 14725367.8
(22) Anmeldetag: 20.05.2014
(51) Int. Cl.: F16H 61/688, F16H 61/02, F16D 48/02, F16H 61/00

(54) **VERFAHREN FÜR EIN HYDRAULIKSYSTEM FÜR EIN DOPPELKUPPLUNGSGETRIEBE**
METHOD FOR A HYDRAULIC SYSTEM FOR A DUAL-CLUTCH GEARBOX
PROCÉDÉ POUR SYSTÈME HYDRAULIQUE DESTINÉ À UNE BOÎTE DE VITESSES À DOUBLE EMBRAYAGE

(30) Priorität: 23.05.2013 DE 102013008740
(43) Veröffentlichungstag der Anmeldung: 30.03.2016
(73) Patentinhaber: Audi AG, 85045 Ingolstadt (DE)
(72) Erfinder: AMMLER, Stefan, 86673 Bergheim (DE)
(74) Vertreter: Lehle, Josef
(86) Internationale Anmeldenummer: PCT/EP2014/001344
(87) Internationale Veröffentlichungsnummer: WO 2014/187555

(56) Entgegenhaltungen:
- DE-A1-102009 054 754
- DE-A1-102011 079 825
- DE-A1-102011 100 802
- DE-A1-102011 100 836
- DE-A1-102011 100 845

## Beschreibung

Die Erfindung betrifft ein Hydrauliksystem für ein Automatikgetriebe, insbesondere Doppelkupplungsgetriebe, eines Kraftfahrzeugs nach dem Patentanspruch 1, ein Kraftfahrzeug mit einem solchen Hydrauliksystem nach dem Patentanspruch 22 sowie ein Verfahren zum Betreiben eines solchen Hydrauliksystems nach dem Patentanspruch 23.
Bei einem Doppelkupplungsgetriebe ist mittels zweier Teilgetriebe ein vollautomatischer Gangwechsel ohne Zugkraftunterbrechung ermöglicht. Die Übertragung des Moments erfolgt über eine von zwei Kupplungen, die die zwei Teilgetriebe mit dem Antrieb verbindet. Die Kupplungen sowie die Aktuatoren zum Einlegen der Gänge sind hydraulisch über ein Hydrauliksystem ansteuerbar. Die DE102011100802 offenbart die Merkmale des Oberbegriffes des Anspruchs 1. Die vorliegende Erfindung betrifft speziell Programmbausteine, die erforderlich sind für eine Signalverarbeitung der Ist-Stromaufnahme des Pumpenantriebs in dem Hydrauliksystem. Mit Hilfe dieser Signalverarbeitung wird erkannt, ob ein Druckspeicher-Ladebedarf vorliegt oder nicht.
Das aus der DE 10 2011 100 836 A1 bekannte Hydrauliksystem ist in einen Hochdruckkreislauf und in einen Niederdruckkreislauf aufgeteilt. Im Hochdruckkreislauf ist ein Druckspeicher vorgesehen, mit dem ein stark temperaturabhängiger Speicherdruck in einer Größenordnung von beispielsweise etwa 30 bar bereitstellbar ist. Zudem sind die hydraulisch betätigbaren Kupplungen sowie Aktuatoren (etwa Gangschaltelemente) im Hochdruckkreislauf angeordnet. Demgegenüber arbeitet der Niederdruckkreislauf bei einem Hydraulikdruck in der Größenordnung von beispielsweise etwa 5 bar. Mittels des Niederdruckkreislaufes erfolgt die Kühlung der Teilkupplungen über die Hydraulikflüssigkeit.

In dem gattungsgemäßen Hydrauliksystem weist der Niederdruckkreislauf eine Kühl-Hydraulikpumpe und der Hochdruckkreislauf eine Lade-Hydraulikpumpe auf, mit der der Druckspeicher auf den erforderlichen Speicherdruck aufgeladen wird. Die beiden Hydraulikpumpen werden über eine gemeinsame Antriebswelle mit Hilfe eines gemeinsamen Elektromotors angetrieben. Der Elektromotor wird über eine Steuereinrichtung angesteuert. Bei Erkennen eines Druckspeicher-Ladebedarfs wird der Elektromotor mit einer Lade-Solldrehzahl angesteuert. Alternativ und/oder zusätzlich wird der Elektromotor zum Beispiel bei Erkennen eines Kühlbedarfs mit einer Kühl-Solldrehzahl angesteuert. Zudem sind der Hochdruckkreislauf und Niederdruckkreislauf über eine Bypassleitung mit integriertem Steuerventil verbindbar. Das Steuerventil ist in Abhängigkeit von dem Speicherdruck im Hochdruckkreislauf ohne weitere Fremdenergie, das heißt selbsttätig, zwischen einer Ladestellung und einer Nicht-Ladestellung (Kühlstellung) verstellbar. In der Ladestellung arbeitet das Hydrauliksystem im Ladebetrieb (das heißt die Lade-Hydraulikpumpe ist mit dem Hochdruckkreislauf strömungstechnisch gekoppelt) sowie bei hoher Pumpenlast mit entsprechend großer Ist-Stromaufnahme. Demgegenüber arbeitet das Hydrauliksystem in der Nicht-Ladestellung (das heißt Kühlstellung) des Steuerventils zum Beispiel in einem Kühlbetrieb oder in einem sonstigen Betrieb, zum Beispiel einem Filterreinigungsbetrieb.

Nachfolgend ist aus Verständnisgründen meist von der Kühlstellung des Steuerventils die Rede. Es wird darauf hingewiesen, dass die Kühlstellung und die Nicht-Ladestellung des Steuerventils identisch sind. Zudem ist aus Verständnisgründen nachfolgend die Rede von einem Kühlbetrieb sowie von einer Kühl-Solldrehzahl. Der Kühlbetrieb ist lediglich ein Beispiel für einen Nicht-Ladebetrieb, so dass der Begriff Kühlbetrieb ohne weiteres mit dem allgemeineren Begriff Nicht-Ladebetrieb ersetzbar ist.

In der Kühlstellung des Steuerventils ist neben der Kühl-Hydraulikpumpe auch die Lade-Hydraulikpumpe strömungstechnisch mit dem Niederdruckkreislauf verbunden sowie vom Hochdruckkreislauf entkoppelt. Im Kühlbetrieb arbeiten die Hydraulikpumpen - im Gegensatz zum Ladebetrieb - bei geringer Pumpenlast mit entsprechend geringer Ist-Stromaufnahme.

Im Stand der Technik wird ein Druckspeicher-Ladebedarf über einen, im Hochdruckkreislauf angeordneten Sensor, etwa einem Drucksensor, erfasst. Sobald der Speicherdruck einen vorgegebenen unteren Grenzwert unterschreitet, schaltet das oben erwähnte Steuerventil automatisch in seine Ladestellung. Außerdem erkennt die Steuereinrichtung mittels des Sensors den Druckspeicher-Ladebedarf. Die Steuereinrichtung steuert bei Erkennen des Druckspeicher-Ladebedarf den gemeinsamen Elektromotor mit der Lade-Solldrehzahl an, wodurch der Druckspeicher im Hochdruckkreislauf aufgeladen wird. Sobald der Speicherdruck einen vorgegebenen oberen Grenzwert überschreitet, schaltet das oben erwähnte Steuerventil automatisch in seine Kühlstellung. Außerdem erkennt die Steuereinrichtung mittels des Sensors, dass kein Druckspeicher-Ladebedarf mehr vorliegt.

Die Anordnung eines Sensors (zum Beispiel Drucksensor oder Ventil-Positionssensor) zum Erkennen eines Druckspeicher-Ladebedarfs im Hochdruckkreislauf ist bauteilaufwändig. Zudem kann der Betrieb des Drucksensors gegebenenfalls störanfällig sein.

Die Aufgabe der Erfindung besteht darin, ein Verfahren für ein Hydrauliksystem für ein Automatikgetriebe, insbesondere Doppelkupplungsgetriebe, eines Kraftfahrzeuges bereitzustellen, bei dem ein Druckspeicher-Ladebedarf betriebssicher erkennbar ist.

Die Aufgabe ist durch die Merkmale des Patentanspruches 1, 22 oder 23 gelöst.. Bevorzugte Weiterbildungen der Erfindung sind in den Unteransprüchen offenbart.

Die Erfindung beruht auf dem Sachverhalt, dass eine Ist-Stromaufnahme des gemeinsamen Elektromotors der Hydraulikpumpen während eines Ladebetriebs zum Aufladen des Druckspeichers wesentlich größer ist als die Ist-Stromaufnahme des gemeinsamen Elektromotors bei einem Kühlbedarf der Kupplungen. Vor diesem Hintergrund kann zum Erkennen eines Druckspeicher-Ladebedarfs eine Strommesseinrichtung des Elektromotors zur Erfassung einer Ist-Stromaufnahme sowie ein Drehzahlsensor zur Erfassung einer Ist-Drehzahl des Elektromotors verwendet werden. Die Steuereinrichtung des Hydrauliksystems weist eine Auswerteeinheit auf, die die Ist-Stromaufnahme sowie die Ist-Drehzahl auswertet und daraus einen Druckspeicher-Ladebedarf erkennt. Bei der Auswertung kann bevorzugt die Ist-Stromaufnahme mit einem Referenzwert verglichen und aus diesem Vergleich ein Druckspeicher-Ladebedarf erkannt werden. Bei Erkennen des Druckspeicher-Ladebedarfs wird der gemeinsame Elektromotor von der Steuereinrichtung mit einer Lade-Solldrehzahl angesteuert, um den Speicherdruck im Hochdruckkreislauf zu erhöhen.

Wie oben erwähnt, werden die Kühl-Hydraulikpumpe und die Lade-Hydraulikpumpe von einem gemeinsamen Elektromotor angetrieben, und zwar durch Ansteuerung der Steuereinrichtung mit einer Lade-Solldrehzahl, einer Kühl-Solldrehzahl oder mit einer sonstigen Drehzahl-Anforderung. Bei Vorliegen mehrerer unterschiedlicher Drehzahl-Anforderungen wird der gemeinsame Elektromotor mit der höchsten Solldrehzahl angesteuert. Die einzelnen Drehzahl-Anforderungen werden in einem Vergleicher-Baustein priorisiert, das heißt nach Relevanz und nach Drehzahl-Größe gewichtet. Das heißt eine als relevant eingestufte Drehzahl-Anforderung mit einer geringeren Drehzahl kann priorisiert werden, und zwar im Vergleich zu einer als weniger relevant eingestuften Drehzahl-Anforderung mit größerer Drehzahl.

Im Hinblick auf eine zuverlässige Erfassung des Ladebedarfs weist die Steuereinrichtung eine Drehzahlkonstanz-Einheit auf. Mit Hilfe dieser Einheit wird erfasst, ob die Hydraulikpumpen mit einer konstanten Ist-Drehzahl laufen. Bei Vorliegen einer solchen konstanten Ist-Drehzahl wird die oben erwähnte Auswerteeinheit aktiviert und gegebenenfalls ein Ladebedarf ermittelt. Sofern keine konstante Ist-Drehzahl vorliegt, wird dagegen die Auswerteeinheit deaktiviert. Das heißt, dass bei einer Drehzahl-Dynamik (Drehzahländerung) die Auswertung der Ist-Stromaufnahme ausgeblendet ist und nur bei konstanter Ist-Drehzahl erfolgt.

Im Hinblick auf eine zuverlässige Ermittlung einer konstanten Ist-Drehzahl des Elektromotors können die folgenden Kriterien festgelegt werden, wonach ein Solldrehzahlgradient gleich Null ist, der gefilterte Solldrehzahlgradient kleiner als ein vorgegebener Schwellwert ist und zudem der Ist-Drehzahlgradient kleiner als ein weiterer Schwellwert ist. Erst wenn diese Bedingungen erfüllt sind, kann die Auswertung, ob ein Druckspeicher-Ladebedarf vorliegt oder nicht, stattfinden. Weiterhin wird sichergestellt, dass die Solldrehzahl erst verändert werden darf, wenn der gefilterte Soll-Drehzahlgradient eine weitere Schwelle unterschritten hat.

Bevorzugt kann in einem Kühlbetrieb sowohl die Kühl-Hydraulikpumpe als auch die Lade-Hydraulikpumpe strömungstechnisch mit dem Niederdruckkreislauf verbunden sein. Im Kühlbetrieb ist die Lade-Hydraulikpumpe dagegen vom Hochdruckkreislauf entkoppelt. Zudem arbeiten die beiden Hydraulikpumpen im Kühlbetrieb bei geringer Pumpenlast sowie geringer Stromaufnahme.

Demgegenüber ist in einem Ladebetrieb die Lade-Hydraulikpumpe nicht mehr mit dem Niederdruckkreislauf, sondern mit dem Hochdruckkreislauf strömungstechnisch verbunden. In einem solchen Ladebetrieb arbeitet die Lade-Hydraulikpumpe bei hoher Pumpenlast sowie entsprechend großer Ist-Stromaufnahme.

Zur Einstellung des Ladebetriebs sowie des Kühlbetriebes kann der Hochdruckkreislauf und der Niederdruckkreislauf über eine Bypassleitung mit integriertem Steuerventil verbunden sein. Das Steuerventil kann in Abhängigkeit von dem Speicherdruck im Hochdruckkreislauf ohne weitere Fremdenergie, das heißt selbsttätig, zwischen einer Ladestellung und einer Kühlstellung verstellt werden. In der Ladestellung arbeitet das Hydrauliksystem im oben definierten Ladebetrieb. In der Kühlstellung arbeitet dagegen das Hydrauliksystem im oben definierten Kühlbetrieb.

Gemäß Vorbeschreibung wirkt der Speicherdruck im Hochdruckkreislauf als ein Steuerdruck, mit dem die Ventilstellung des Steuerventils einstellbar ist. Das Steuerventil wird dabei selbsttätig in seine Ladestellung verstellt, sofern der Speicherdruck im Hochdruckkreislauf einen unteren Schwellwert unterschreitet. Im Gegenzug wird das Steuerventil selbsttätig in seine Kühlstellung verstellt, sofern der Speicherdruck im Hochdruckkreislauf einen oberen Schwellwert überschreitet.

Wie oben erwähnt, wird zum Erkennen eines Druckspeicher-Ladebedarfs die von der Strommesseinrichtung erfasste Ist-Stromaufnahme mit einem Referenzwert verglichen. Der Referenzwert kann anhand eines in der Steuereinrichtung hinterlegten Referenzwert-Polynoms ermittelt werden, in der in Abhängigkeit von der Ist-Drehzahl ein geeigneter Stromaufnahme-Referenzwert auslesbar ist.

Das oben erwähnte Referenzwert-Polynom kann in einer Initialisierungsphase, zum Beispiel bei einem erstmaligen Fahrbetrieb des Fahrzeuges, generiert werden. Bei einer solchen Initialisierungsphase kann in einem aktuellen Betriebszustand, das heißt in einem Kühlbetrieb-Zeitintervall oder in einem Ladebetrieb-Zeitintervall, bei unterschiedlichen Ist-Drehzahlen (und gegebenenfalls unterschiedlichen Temperaturen) die jeweils korrespondierende Ist-Stromaufnahme erfasst werden. Aus diesen Wertepaaren kann dann das Referenzwert-Polynom ermittelt werden.

Während der Initialisierungsphase steht noch kein Referenzwert für das Erkennen des Druckspeicher-Ladebedarfs zur Verfügung. Um dennoch einen Druckspeicher-Ladebedarf zu erkennen, kann alternativ eine Auswerteeinheit der Steuereinrichtung aus einem Vergleich einer Ist-Stromaufnahme und einem gefilterten Wert der Ist-Stromaufnahme einen Druckspeicher-Ladebedarf ermitteln. Übersteigt die Differenz der Ist-Stromaufnahme und des gefilterten Wertes der Ist-Stromaufnahme einen vorgegebenen Wert, so kann daraus auf einen Umschaltvorgang des Steuerventils von der Kühlstellung (mit entsprechend geringer Ist-Stromaufnahme) auf die Ladestellung (mit entsprechend großer Ist-Stromaufnahme) geschlossen werden. Unterschreitet dagegen die Differenz der Ist-Stromaufnahme und des gefilterten Wertes der Ist-Stromaufnahme einen vorgegebenen Wert, so kann daraus auf einen Umschaltvorgang des Steuerventils von der Ladestellung auf die Kühlstellung geschlossen werden.

Für eine einwandfreie Erfassung des Druckspeicher-Ladebedarfs während der Initialisierungsphase kann die Steuereinrichtung einen Programmbaustein aufweisen. Dieser erfasst, ob die Hydraulikpumpen bei konstanter Drehzahl laufen. Bei Vorliegen einer Drehzahlkonstanz kann die oben erwähnte Auswerteeinheit aktiviert werden. Dagegen kann bei Nichtvorliegen einer konstanten Drehzahl die oben erwähnte Auswerteeinheit deaktiviert sein.

Nach erfolgter Generierung des Referenzwert-Polynoms während der Initialisierungsphase kann der Druckspeicher-Ladebedarf aus dem bereits weiter oben erwähnten Vergleich zwischen der Ist-Stromaufnahme mit dem korrespondierenden Referenzwert erkannt werden.

Sofern weder ein Kühlbedarf noch ein Ladebedarf vorliegt, kann die Steuereinrichtung den Elektromotor mit einer Prüfdrehzahl ansteuern, die im Vergleich zur Lade-Solldrehzahl und zur Kühl-Solldrehzahl stark reduziert ist. Die Prüfdrehzahl kann einer Mindestdrehzahl entsprechen, bei der eine einwandfreie Erfassung sowie Signalverarbeitung der Ist-Stromaufnahme sowie der Ist-Drehzahl gewährleistet ist. Auf diese Weise kann der Energieaufwand bei der Steuerung des Hydrauliksystems reduziert werden.

Zur weiteren Reduzierung des Energieaufwandes ist erfindungsgemäß die Steuereinrichtung die an dem gemeinsamen Elektromotor anliegende Solldrehzahl für eine vorgegebene Stillstand-Zeitdauer auf Null absenkbar, sofern weder ein Druckspeicher-Ladebedarf noch ein Kühlbedarf vorliegt. Nach Ablauf dieser Stillstand-Zeitdauer kann die Steuereinrichtung den Elektromotor abermals wieder zumindest mit der oben genannten Prüfdrehzahl ansteuern.

Die Länge der Stillstand-Zeitdauer kann aus Gründen der Betriebssicherheit so bemessen sein, dass eine erneute Ansteuerung des Elektromotors mit der Prüfdrehzahl noch vor dem Beginn des nächsten Druckspeicher-Ladebedarfs erfolgt. Vor diesem Hintergrund kann die Steuereinrichtung zur Ermittlung der Stillstand-Zeitdauer eine Druckmodell-Einheit aufweisen. Die Druckmodell-Einheit kann die Aktuator-Betätigungen während der gesamten Betriebszeit erfassen und jeder Aktuator-Betätigung einen Teildruckverlust zuordnen. Der jeweilige Teildruckverlust korreliert mit der, mit einer Aktuator-Betätigung verbundenen Hydraulikflüssigkeit-Entnahme aus dem Hochdruckkreislauf. Die Druckmodell-Einheit kann den zeitlichen Verlauf des Speicherdruckes während der Stillstand-Zeitdauer auf der Grundlage der erfassten Aktuator-Betätigungen nachbilden. Bei Erreichen eines Mindestdruckes im Druckmodell kann die Steuereinrichtung den gemeinsamen Elektromotor mit der Prüfdrehzahl ansteuern und dadurch die Stillstand-Zeitdauer beenden.

Wie oben erwähnt, kann der zeitliche Speicherdruck-Verlauf auf der Grundlage der Aktuator-Betätigungen bestimmt werden. Zusätzlich kann auch der Druckverlust aufgrund von Basisleckage bei der Generierung des Druckmodells berücksichtigt werden. Unter Basisleckage ist der Hydraulikflüssigkeitsverlaust zu versehen, der unabhängig von der Aktuator-Betätigung zum Beispiel aufgrund von Ventilspalten ergibt. Die Basisleckage ist mit Druckverlusten verbunden, die den Speicherdruck im Hochdruckkreislauf kontinuierlich, das heißt mit im Wesentlichen konstanter Steigung, reduzieren, und zwar unabhängig von Aktuator-Betätigungen. Demgegenüber führt eine Aktuator-Betätigung zu einer mehr oder minder schlagartigen Hydraulikflüssigkeit-Entnahme aus dem Hochdruckspeicherkreislauf, wodurch sich der Speicherdruck im Wesentlichen schlagartig um eine der Öl-Entnahme korrespondierende Druckdifferenz (oberer Schwellwert minus unterer Schwellwert) reduziert.

Die Druckmodell-Einheit kann zur Nachbildung des zeitlichen Speicherdruckverlaufes im Zeitraum zwischen zwei erkannten Ladebedarfen die oben genannte Basisleckage-Steigung abschätzen oder ermitteln. Zur Ermittlung der Steigung aufgrund von Basisleckage kann die Steuereinrichtung das Zeitintervall zwischen dem Ladebetrieb-Endzeitpunkt und dem Anfangszeitpunkt eines darauffolgenden Ladebetriebs erfassen. Zum Ladebetrieb-Endzeitpunkt weist der Hochdruckspeicherkreislauf einen Speicherdruck auf, der dem oberen Schwellwert entspricht. Demgegenüber ist der Speicherdruck bis zum Anfangszeitpunkt des darauffolgenden Ladebetriebs bis auf den unteren Schwellwert um eine bekannte Druckdifferenz (oberer Schwellwert minus unterer Schwellwert) reduziert. Aus dieser bekannten Druckdifferenz (abzüglich der in dem Zeitintervall erfolgten Teildruckverluste durch Aktuator-Betätigungen) kann in einfacher Weise die Steigung aufgrund von Basisleckage ermittelt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: ein Blockschaltbild eines Doppelkupplungsgetriebes für ein Kraftfahrzeug mit sieben Vorwärtsgängen sowie einem Rückwärtsgang;
- Fig. 2: das Hydrauliksystem des Doppelkupplungsgetriebes aus der Fig. 1;
- Fig. 3: Programmbausteine der Steuereinrichtung zur Ansteuerung des Elektromotors der Hydraulikpumpen des Hydrauliksystems in einer grob vereinfachten Prinzipdarstellung gemäß einem nicht von der Erfindung umfassten Vergleichsbeispiel;
- Fig. 4: eine Drehzahlkonstanz-Einheit der Steuereinrichtung;
- Fig. 5: eine Auswerteeinheit der Steuereinrichtung;
- Fig. 6: in einem Diagramm die zeitlichen Verläufe relevanter Parameter während eines Betriebes des Hydrauliksystems;
- Fig. 7: in einer Ansicht entsprechend der Fig. 3 eine Steuereinrichtung gemäß dem Ausführungsbeispiel der Erfindung;
- Fig. 8: eine Druckmodell-Einheit der in der Fig. 7 gezeigten Steuereinrichtung; und
- Fig. 9: in einem Diagramm die zeitlichen Verläufe relevanter Parameter während eines Betriebes des Hydrauliksystems gemäß dem zweiten Ausführungsbeispiels.

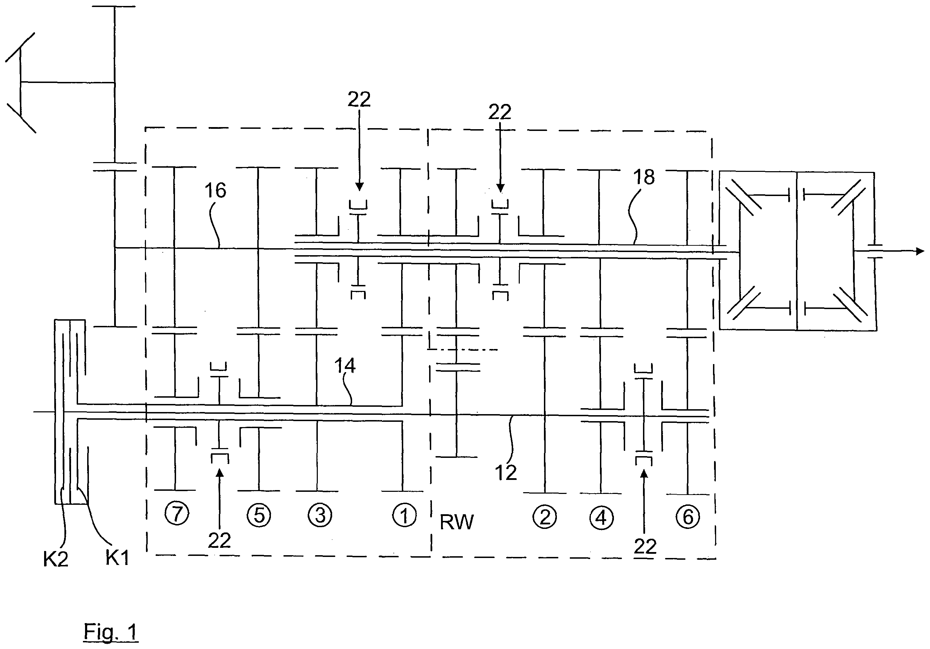

In der Fig. 1 ist in einer Prinzipdarstellung ein Doppelkupplungsgetriebe für ein Kraftfahrzeug mit Allradantrieb gezeigt. Das Doppelkupplungsgetriebe weist sieben Vorwärtsgänge (siehe die eingekreisten Ziffern 1 bis 7) sowie einen Rückwärtsgang RW auf. Das Doppelkupplungsgetriebe ist nachfolgend nur insoweit beschrieben, als es für das Verständnis der Erfindung erforderlich ist. So weist das Doppelkupplungsgetriebe zwei Eingangswellen 12, 14 auf, die koaxial zueinander angeordnet sind und über zwei hydraulisch betätigbare Lamellenkupplungen K1, K2 alternierend mit der Antriebsquelle, zum Beispiel eine Brennkraftmaschine, verbindbar sind. die Eingangswelle 14 ist als eine Hohlwelle ausgeführt, in der die als Vollwelle ausgebildete Eingangswelle 12 geführt ist. Die beiden Eingangswellen 12, 14 treiben über Zahnradsätze der Vorwärtsgänge sowie des Rückwärtsganges auf eine achsparallel angeordnete Abtriebswelle 16 und eine als Hohlwelle gebildete Zwischenwelle 18 ab. Die Zahnradsätze der Vorwärtsgänge 1 bis 7 weisen jeweils Festzahnräder und über Aktuatoren 22 schaltbare Loszahnränder auf. Die Aktuatoren 22 können beispielhaft Doppelsynchronkupplungen sein, die jeweils aus einer Neutralstellung heraus zwei benachbarte Loszahnräder schalten können.

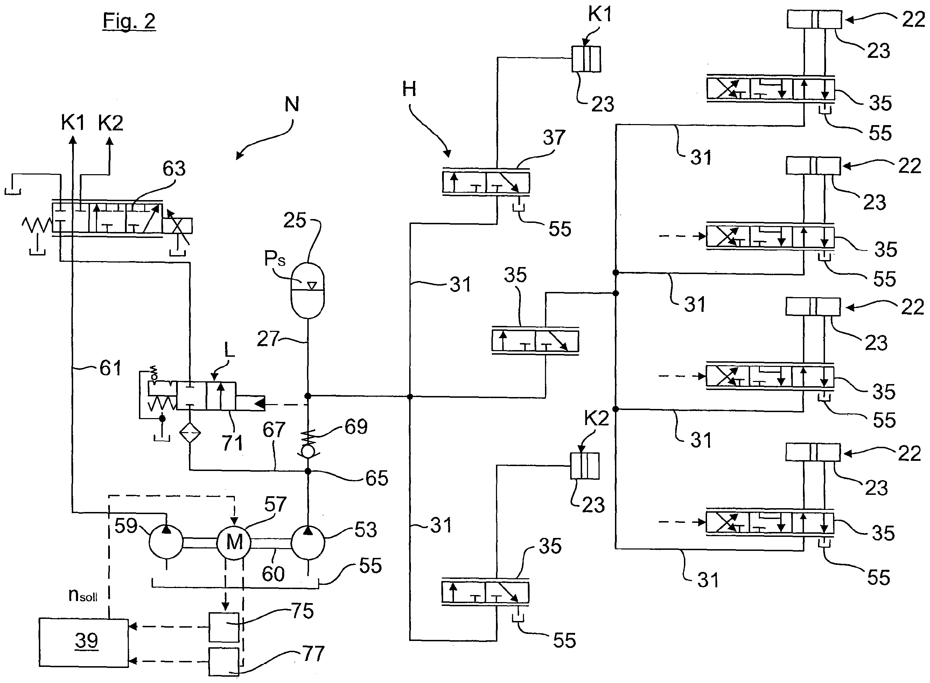

In der Fig. 2 ist das Hydrauliksystem des Doppelkupplungsgetriebes in einem stark vereinfachten Blockschaltbild dargestellt. Mit Hilfe des Hydrauliksystems werden die Hydraulikzylinder 23 der Kupplungen K1, K2 sowie der Aktuatoren 22 betätigt. Das Hydrauliksystem weist gemäß der Fig. 2 einen Hochdruckkreislauf H sowie einen Niederdruckkreislauf N auf. In dem Hochdruckkreislauf H können die darin geschalteten Hydraulikzylinder 23 der Kupplungen K1, K2 sowie der Aktuatoren 22 über einen Druckspeicher 25 mit einem Speicherdruck p_{S} beaufschlagt werden, der in einer Größenordnung von zum Beispiel 30 bar liegen kann. Hierzu ist eine am Druckspeicher 25 angeschlossene Hauptleitung 27 über nicht näher beschriebene Teilleitungen 31 zu den Hydraulikzylindern 23 geführt. In den Teilleitungen 31 sind jeweils Steuerventile 35 angeordnet. Die Steuerventile 35 sind in nicht dargestellter Weise über eine zentrale Steuereinrichtung 39 ansteuerbar.

Das Hydrauliksystem weist zudem eine Lade-Hydraulikpumpe 53 auf, die eingangsseitig mit einem Ölsumpf 55 verbunden ist. Die Lade-Hydraulikpumpe 53 ist zum Aufladen des Druckspeichers 25 über einen Elektromotor 57 von der Steuereinheit 39 ansteuerbar. Zudem ist die Lade-Hydraulikpumpe 53 zusammen mit einer Kühl-Hydraulikpumpe 59 auf einer gemeinsamen Antriebswelle 60 angeordnet, die vom Elektromotor 57 angetrieben wird. Die Kühl-Hydraulikpumpe 59 ist ausgangsseitig mit einer Niederdruckleitung 61 in Verbindung, die zu einem Verteilerventil 63 führt. In Abhängigkeit von der Stellung des Verteilerventiles 63 kann bei Vorliegen von Kühlbedarf die Hydraulikflüssigkeit zur ersten und/oder zweiten Kupplung K1, K2 und anschließend in den Ölsumpf 55 rückgeführt werden.

Gemäß der Fig. 2 zweigt die Hauptleitung 27 des Hochdruckkreislaufes H an einer Verzweigungsstelle 65 in eine Bypassleitung 67 ab, die mit der Niederdruckleitung 61 des Niederdruckkreislaufes N verbunden ist. Stromab der Verzweigungsstelle 65 ist ein später beschriebenes Rückschlagventil 69 angeordnet. Zudem ist in der Bypassleitung 67 ein Steuerventil 71 integriert.

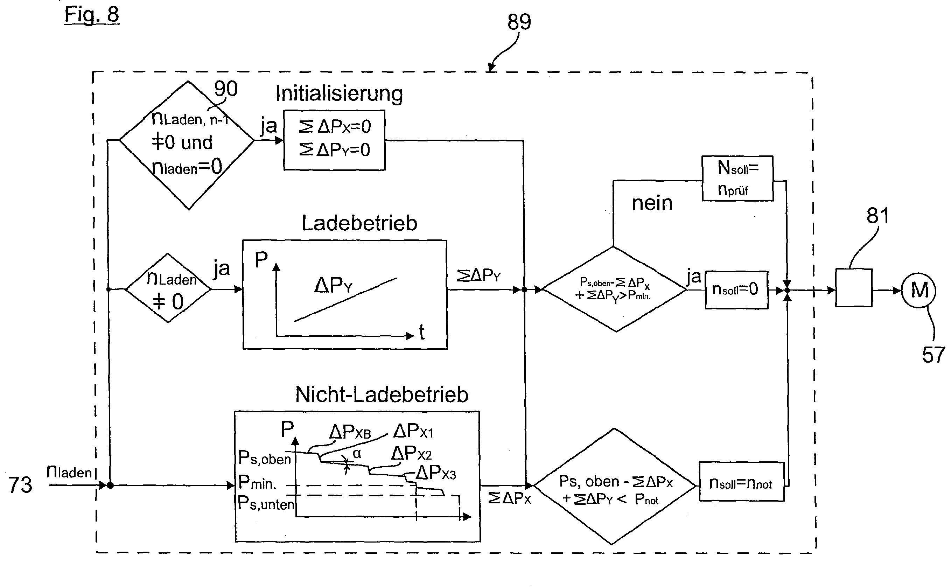

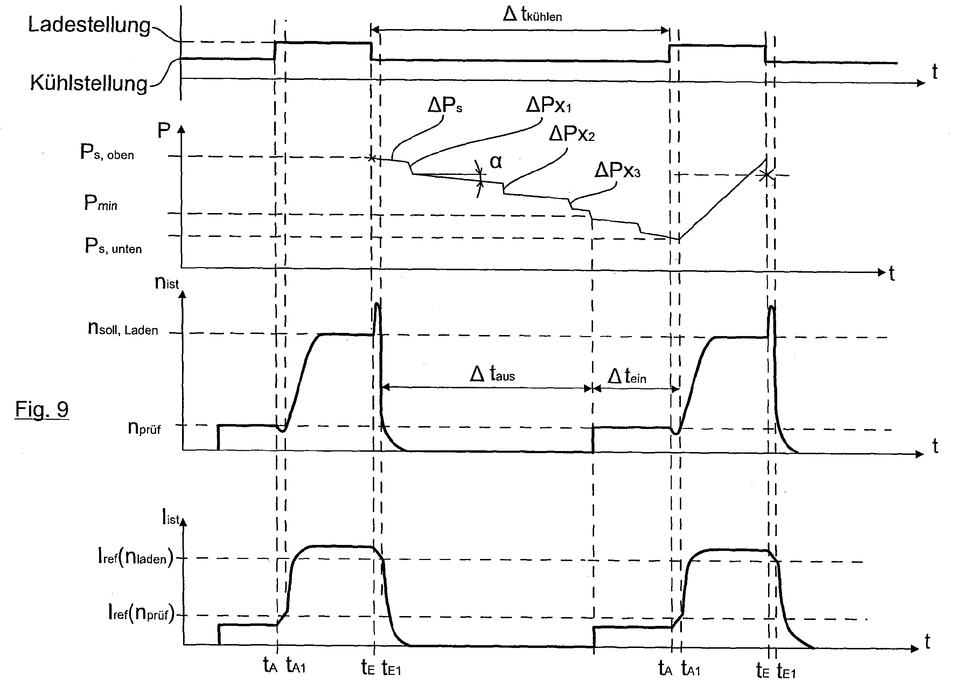

Das Steuerventil 71 kann in Abhängigkeit von Höhe des Speicherdruckes p_{S} im Hochdruckkreislauf H zwischen in der Fig. 2 gezeigten Ladestellung L und einer Kühlstellung K verstellt werden. Der Speicherdruck p_{S} im Hochdruckkreislauf H wirkt als ein Steuerdruck, mit dem das Steuerventil 71 ohne zusätzliche Fremdenergie, das heißt selbsttätig, verstellbar ist. Das Steuerventil 71 ist dabei so ausgelegt, dass es sich in die Ladestellung L verstellt, sofern der Speicherdruck p_{S} im Hochdruckkreislauf H einen unteren Schwellwert p_{S,unten} (Fig. 8 und 9), zum Beispiel 25 bar, unterschreitet. Außerdem wird das Steuerventil 71 selbsttätig in seine Kühlstellung K verschoben, sofern der Speicherdruck pₛ einen oberen Schwellwert p_{S,oben} (Fig. 8 und 9), zum Beispiel 28 bar, überschreitet.

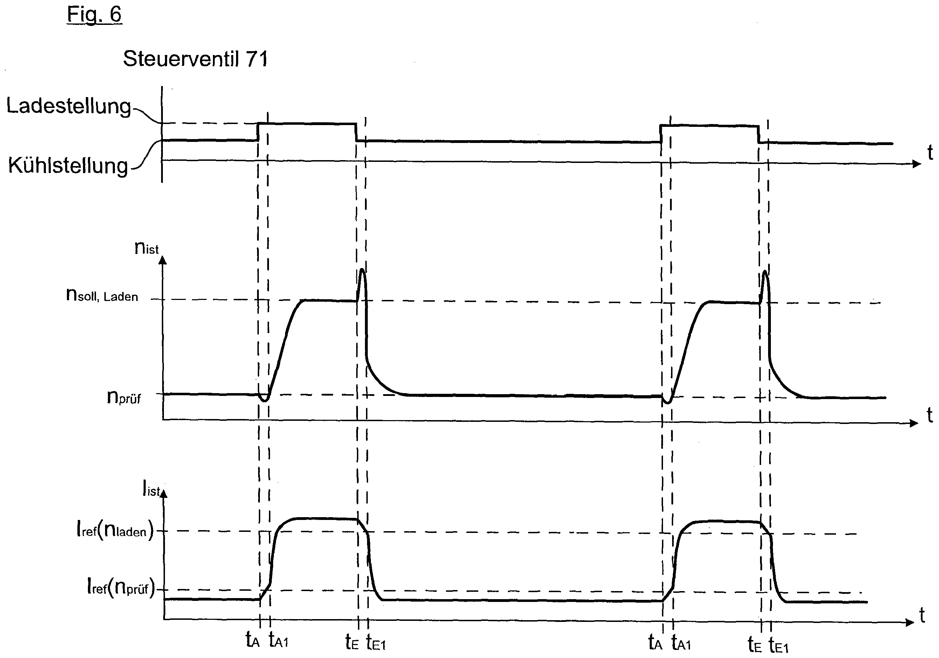

Im Fahrbetrieb kommt es durch Betätigungen der Kupplungen K1, K2 sowie der Aktuatoren 22 zu Druckverlusten. Zudem ergeben sich weitere Druckverluste durch eine Basisleckage, das heißt aufgrund von Ventilspalten oder dergleichen, im Hochdruckkreislauf H. Dadurch wird der Speicherdruck p_{S} während des Fahrbetriebes reduziert. Für den Fall, dass der Speicherdruck p_{S} den unteren Schwellwert p_{S,unten} unterschreitet (das heißt es liegt ein Druckspeicher-Ladebedarf vor), verstellt sich das Steuerventil 71 selbsttätig in seine Ladestellung L (Fig. 2). Bei Erkennen des Druckspeicher-Ladebedarfs steuert die Steuereinrichtung 39 den Elektromotor 57 gemäß der Fig. 6 mit einer Lade-Solldrehzahl n_{soll,laden} an. Dadurch kann die Lade-Hydraulikpumpe 53 den Druckspeicher 25 aufladen. In einem solchen Ladebetrieb arbeitet die Lade-Hydraulikpumpe 53 unter großer Pumpenlast und daher mit entsprechend großer Ist-Stromaufnahme Iᵢₛₜ. Überschreitet der Speicherdruck p_{S} den oberen Schwellwert p_{S,oben} (das heißt es liegt kein Druckspeicher-Ladebedarf mehr vor), so stellt sich das Steuerventil 71 selbsttätig in seine Kühlstellung K. In der Kühlstellung K fördert die Lade-Hydraulikpumpe 53 über die nunmehr geöffnete Bypassleitung 67 Hydrauliköl in den Niederdruckkreislauf N. Gleichzeitig ist der Hochdruckkreislauf H über das Rückschlagventil 69 druckdicht geschlossen. Entsprechend arbeitet die Lade-Hydraulikpumpe 53 nicht mehr mit hoher, sondern mit einer reduzierten Pumpenlast sowie entsprechend geringer Ist-Stromaufnahme Iᵢₛₜ.

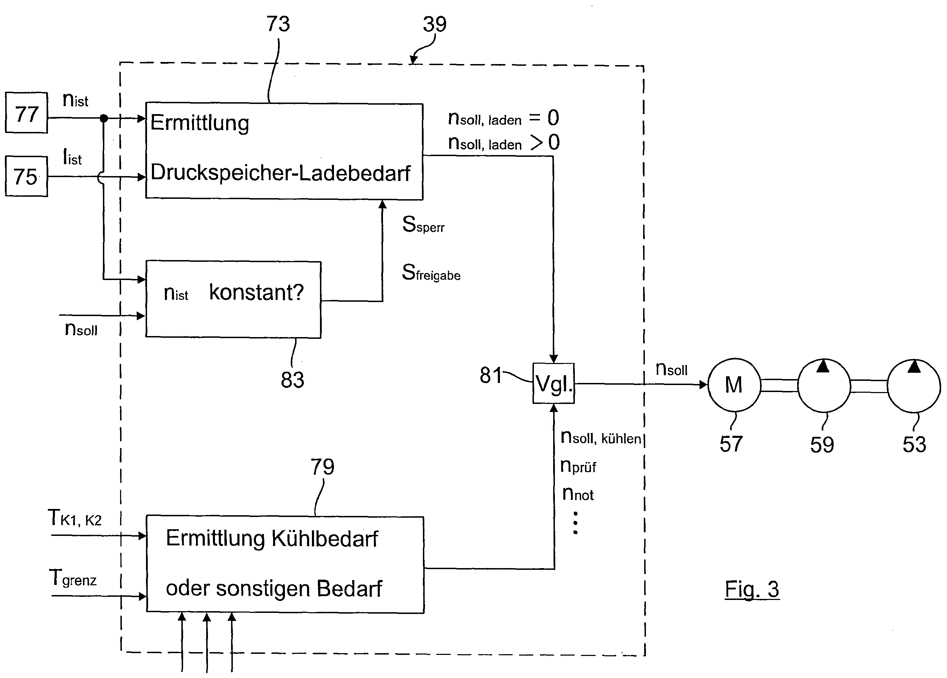

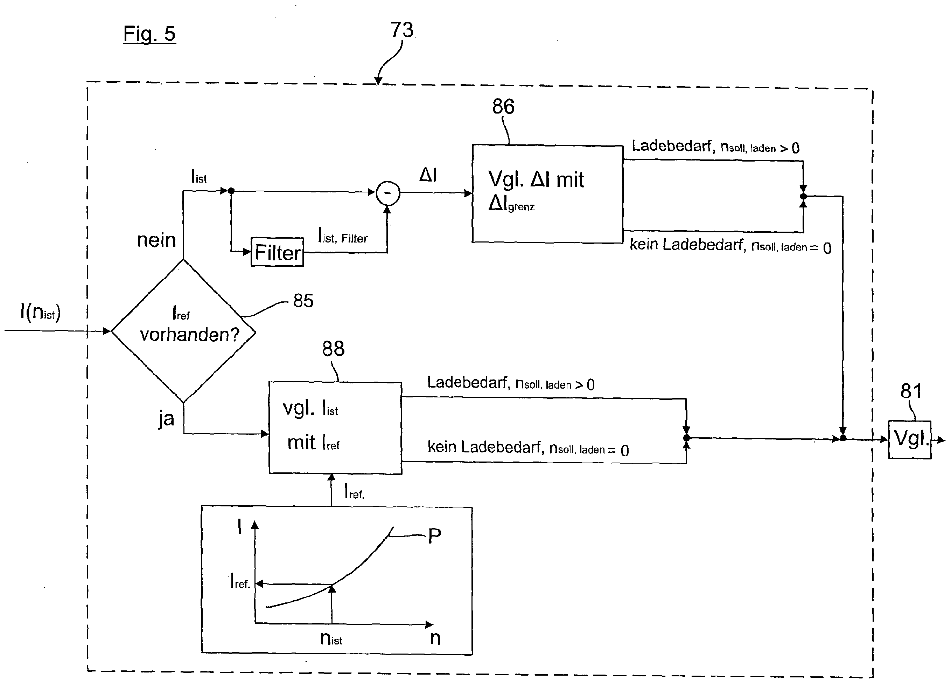

Wie oben erwähnt, steuert die Steuereinrichtung 39 bei Erkennen eines Druckspeicher-Ladebedarfs den Elektromotor 57 mit einer Lade-Solldrehzahl n_{soll,laden} an. Zum Erkennen eines solchen Druckspeicher-Ladebedarfs ist erfindungsgemäß auf einen Drucksensor im Hochdruckkreislauf H oder einem Lagesensor im Steuerventil 71 verzichtet. Anstelle dessen weist die Steuereinrichtung 39 eine Auswerteeinheit 73 (Fig. 3 und 5) auf. Die Auswerteeinheit 73 ist gemäß der Fig. 2 signaltechnisch in Verbindung mit einer in der Motoransteuerung integrierten Strommesseinrichtung 75, die eine Ist-Stromaufnahme Iᵢₛₜ des Elektromotors 57 erfasst, und mit einem Drehzahlsensor 77, der eine Ist-Drehzahl nᵢₛₜ des Elektromotors 57 erfasst. Bei Ermittlung eines Druckspeicher-Ladebedarfs generiert die Auswerteinheit 73 eine Lade-Solldrehzahl n_{soll,laden}. Liegt kein Druckspeicher-Ladebedarf vor, so erfolgt in der Auswerteeinheit 73 keine Generierung, das heißt die Lade-Solldrehzahl n_{soll,laden} wird auf Null gesetzt.

Außerdem weist die Steuereinrichtung 39 gemäß der Fig. 3 eine weitere Auswerteeinheit 79 auf, mit der Kühlbedarf zur Kühlung der Kupplungen K1, K2 oder ein sonstiger Bedarf erkannt wird. Insgesamt kann die Auswerteeinheit 79 in Abhängigkeit unterschiedlicher Eingangsparameter eine Vielzahl von Bedarf-Erkennungen durchführen. Je nach erkanntem Bedarf generiert die Auswerteeinheit 79 zum Beispiel eine in der Fig. 3 gezeigte Kühl-Solldrehzahl n_{soll,kühlen}, eine Prüfdrehzahl n_{prüf}, eine Notdrehzahl nₙₒₜ oder eine sonstige Soll-Drehzahlvorgabe. In der in der Fig. 3 gezeigten Auswerteeinheit 79 wird beispielhaft eine Kupplungstemperatur T_{K1,K2} mit einer vorgegebenen Grenztemperatur T_{grenz} verglichen. Sofern die Kupplungstemperatur T_{K1,K2} die Grenztemperatur T_{grenz} übersteigt, wird ein Kühlbedarf erkannt und entsprechend eine Kühl-Solldrehzahl n_{soll,kühlen} generiert. Bei Nichtvorliegen eines Kühlbedarfs wird die Prüfdrehzahl n_{prüf} generiert. Die in der Auswerteeinheiten 73 und 79 generierten Drehzahlen werden zu einem Vergleicher-Baustein 81 geleitet. Der Vergleicher-Baustein 81 priorisiert die einzelnen Drehzahl-Anforderungen nach Relevanz und nach Drehzahl-Größe. Das heißt eine als relevant eingestufte Drehzahl-Anforderung mit einer geringeren Drehzahl kann gegenüber einer als weniger relevant eingestuften Drehzahl-Anforderung priorisiert werden, die eine größere Drehzahl aufweist. Die von dem Vergleicher-Baustein 81 priorisierte Drehzahlvorgabe wird als Solldrehzahl nₛₒₗₗ zum Elektromotor 57 geleitet.

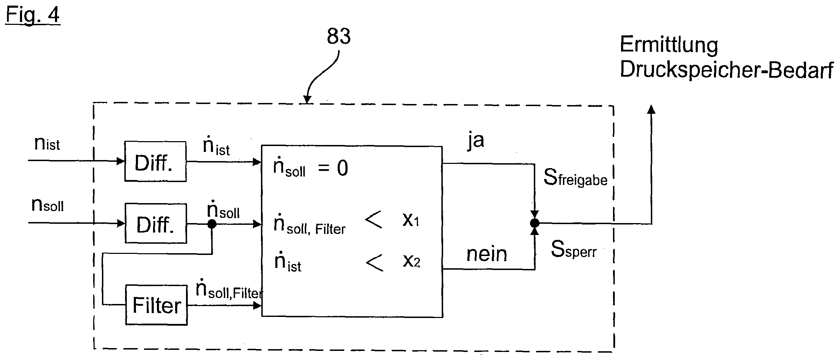

Wie aus der Fig. 3 weiter hervorgeht, ist der Auswerteeinheit 73 zum Erkennen eines Druckspeicher-Ladebedarfes eine Drehzahlkonstanz-Einheit 83 zugeordnet. Mit Hilfe dieser Einheit 83 wird erfasst, ob die Hydraulikpumpen 53, 59 bei konstanter Ist-Drehzahl laufen. Bei Nichtvorliegen einer konstanten Ist-Drehzahl (das heißt bei einer Drehzahländerung) wird die Auswerteeinheit 73 über ein Sperrsignal Sₛₚₑᵣᵣ deaktiviert. Im Gegenzug wird bei Vorliegen einer konstanten Ist-Drehzahl die Auswerteeinheit 73 mit einem Freigabesignal S_{freigabe} aktiviert. Die Drehzahlkonstanz-Einheit 83 ist in der Fig. 4 detaillierter dargestellt. Demzufolge ist eine Drehzahlkonstanz dann festgestellt, wenn der Solldrehzahlgradient ṅₛₒₗₗ gleich null ist und der gefilterte Solldrehzahlgradient ṅ_{soll,Filter} kleiner als ein Schwellwert x₁ ist. Zudem muss der Ist-Drehzahlgradient ṅᵢₛₜ kleiner als ein weiterer Schwellwert x₂ sein, wie es aus dem Blockschaltdiagramm der Fig. 4 hervorgeht.

In der Fig. 5 ist die Auswerteeinheit 73 zum Erkennen eines Druckspeicher-Ladebedarfs in einem detaillierteren Blockschaltdiagramm gezeigt. Demzufolge wird zunächst in einem Programmbaustein 85 ermittelt, ob bereits Referenzwerte I_{ref} für einen Vergleich mit einer Ist-Stromaufnahme Iᵢₛₜ des Elektromotors 57 vorhanden sind. Falls nein, erfolgt eine Initialisierungsphase. In der Initialisierungsphase wird der Elektromotor 57 mit einem hohen Drehzahl-Niveau angesteuert. Zudem wird gemäß der Fig. 5 ein Druckspeicher-Ladebedarf in einem Vergleicher-Baustein 86 ermittelt, und zwar aus einer Differenz ΔI der Ist-Stromaufnahme Iᵢₛₜ mit einem gefilterten Wert I_{ist,Filter} der Ist-Stromaufnahme Iᵢₛₜ. Sofern die Differenz Δl zwischen der Ist-Stromaufnahme Iᵢₛₜ und dem gefilterten Wert I_{ist,Filter} bei Null liegt, hat sich keine, aus einem Umschaltvorgang des Steuerventiles 71 resultierende sprunghafte Stromaufnahme-Änderung (aufgrund unterschiedlicher Pumpenlasten) eingestellt.

Demgegenüber ergibt sich bei einem solchen, selbsttätig erfolgenden Umschaltvorgang des Steuerventiles 71 ein signifikanter Unterschied zwischen der Ist-Stromaufnahme Iᵢₛₜ und dem gefilterten Wert I_{ist,Filter}. Wird ein solcher signifikanter Unterschied erfasst, kann (in Abhängigkeit vom Vorzeichen des Unterschieds) erkannt werden, ob das Steuerventil 71 in seiner Ladestellung L oder in seiner Kühlstellung K ist (das heißt ob ein Druckspeicher-Ladebedarf vorliegt oder nicht). Bei Erkennen eines solchen Druckspeicher-Ladebedarfs steuert die Steuereinrichtung 39 den Elektromotor 57 mit der Lade-Solldrehzahl n_{soll,laden} an, um einen einwandfreien Ladevorgang des Druckspeichers 25 zu gewährleisten. Bei Nicht-Vorliegen eines Druckspeicher-Ladebedarfs wird in dem Vergleicher-Baustein 86 keine Drehzahl-Vorgabe generiert, das heißt die Solldrehzahl n_{soll,laden} wird auf Null gesetzt.

In der oben beschriebenen Initialisierungsphase wird zudem ein in der Fig. 5 angedeutetes und in der Steuereinrichtung 39 hinterlegbares Referenz-Polynom P ermittelt, und zwar auf der Grundlage von Wertepaaren, bestehend aus unterschiedlichen Ist-Drehzahlen und damit korrelierenden Ist-Stromaufnahmen des Elektromotors 57. Die Generierung des Referenz-Polynoms P muss jedoch entweder durchgängig während eines Kühlbetrieb-Zeitintervalls oder durchgängig während eines Ladebetrieb-Zeitintervalls erfolgen, um mit den erfassten Wertepaaren ein aussagekräftiges Referenz-Polynom P zu erhalten.

Nach einer (zum Beispiel durchgängig im Kühlbetrieb-Zeitintervall) erfolgten Generierung des Referenz-Polynoms P wird der Druckspeicher-Ladebedarfs nicht mehr durch Überwachung der Differenz Δl zwischen der Ist-Stromaufnahme Iᵢₛₜ und dem gefilterten Wert I_{ist,Filter} (das heißt im Vergleicher-Baustein 86) erkannt, sondern in einem Vergleicher-Baustein 88, und zwar aus einem Vergleich der Ist-Stromaufnahme Iᵢₛₜ und dem dazu korrespondierenden Referenzwert I_{ref} (wird aus dem Referenz-Polynom P ermittelt). Hierzu wird gemäß der Fig. 5 die Ist-Stromaufnahme Iᵢₛₜ über den Programmbaustein 85 zu dem Vergleicher-Baustein 88 geleitet. Sofern die Ist-Stromaufnahme Iᵢₛₜ in etwa dem korrespondierenden Referenzwert I_{ref} entspricht, arbeitet die Lade-Hydraulikpumpe 53 nicht gegen den hohen Speicherdruck p_{S}, sondern vielmehr mit geringer Ist-Stromaufnahme gegen den vergleichsweise geringen Druck im Niederdruckkreislauf N. Entsprechend ist das Steuerventil 71 in seiner Kühlstellung K und der Speicherdruck p_{S} noch ausreichend groß, so dass kein Druckspeicher-Ladebedarf vorliegt. In diesem Fall wird von dem Vergleicher-Baustein 88 keine Drehzahl-Anforderung generiert, das heißt die Solldrehzahl n_{soll,laden} wird auf Null gesetzt.

Für den Fall, dass die Ist-Stromaufnahme Iᵢₛₜ deutlich größer als der korrespondierende Referenzwert I_{ref} ist, arbeitet die Lade-Hydraulikpumpe 53 gegen den hohen Speicherdruck p_{S} im Hochdruckkreislauf H (mit entsprechend hoher Stromaufnahme). In diesem Fall wird im Vergleicher-Baustein 88 ein Druckspeicher-Ladebedarf erkannt sowie eine Lade-Solldrehzahl n_{soll,laden} generiert und zum Vergleicher-Baustein 81 geleitet.

Anhand der Fig. 6 sind in einem Diagramm die zeitlichen Verläufe der im Betrieb des Hydrauliksystems relevanten Parameter dargestellt, nämlich oben der zeitliche Ablauf selbstständig erfolgender Umschaltvorgänge des Schaltventils 71, in der Bildmitte den zeitlichen Verlauf der Ist-Drehzahl nᵢₛₜ und unten den zeitlichen Verlauf der Ist-Stromaufnahme Iᵢₛₜ. Demzufolge schaltet das Steuerventil 71 zu einem Zeitpunkt t_{A} von der Kühlstellung (das heißt Nicht-Ladestellung) K in die Ladestellung L und zu einem Zeitpunkt t_{E} wieder in seine Kühlstellung K. In der vorliegenden Betriebssituation liegt bis zum Zeitpunkt t_{A} weder ein Kühl- oder sonstiger Bedarf noch ein Druckspeicher-Ladebedarf vor. Die Steuereinrichtung 39 steuert daher den Elektromotor 57 mit einer Soll-Prüfdrehzahl n_{prüf} (beispielhaft bei 600 Upm) an, woraus sich eine entsprechende Ist-Drehzahl nᵢₛₜ einstellt.

Zum Zeitpunkt t_{A} schaltet das Steuerventil 71 selbsttätig in seine Ladestellung L um. Mit dem Erreichen der Ladestellung L erhöht sich zunächst - bei noch eingestellter Prüfdrehzahl n_{prüf} - nur die Ist-Stromaufnahme Iᵢₛₜ. Diese Ist-Stromerhöhung ergibt sich (bei noch eingestellter Prüfdrehzahl n_{prüf}) alleine aus der mit dem Wechsel in die Ladestellung L verknüpften Laststeigerung. Erst wenn zu einem Zeitpunkt t_{A1} (Fig. 6) vom Vergleicher-Baustein 88 (Fig. 5) erkannt wird, dass die Ist-Stromaufnahme Iᵢₛₜ den Referenzwert I_{ref}(n_{prüf}) überschritten hat, generiert der Vergleicher-Baustein 88 (Fig. 5) eine Drehzahl-Anforderung. Entsprechend wird auf die Soll-Ladedrehzahl n_{soll,Laden} erhöht, woraufhin sich eine entsprechende Ist-Drehzahl nᵢₛₜ einstellt (Fig. 6, Bildmitte). Die Solldrehzahl-Erhöhung auf die Ladedrehzahl n_{soll,Laden} erfolgt zum Zeitpunkt t_{A1} und ist mit einem weiteren Anstieg der Ist-Stromaufnahme Iᵢₛₜ verbunden. Somit ergeben sich zwei Ist-Stromanstiege, nämlich einen ersten Stromanstieg aufgrund der Laststeigerung (bis zum Zeitpunkt t_{A1}) und einen zweiten Stromanstieg aufgrund der Solldrehzahl-Erhöhung.

Zum Zeitpunkt t_{E} schaltet das Steuerventil 71 selbsttätig wieder in seine Kühlstellung (bzw. Nicht-Ladestellung) K zurück. Bei Vorliegen von, durch die Drehzahlkonstanz-Einheit 83 ermittelter Drehzahlkonstanz wird abermals auf der Grundlage der Ist-Stromaufnahme Iᵢₛₜ erfasst, ob ein Ladebedarf vorliegt oder nicht. Mit dem Erreichen der Kühlstellung K sinkt zunächst - bei noch vom dem Vergleicher-Baustein 88 generierter Soll-Ladedrehzahl n_{soll,Laden} - nur die Ist-Stromaufnahme Iᵢₛₜ. Diese Ist-Stromsenkung ergibt sich (bei noch vom Vergleicher-Baustein 88 generierter Soll-Ladedrehzahl n_{soll,laden}) alleine aus der mit dem Wechsel in die Kühlstellung K verbundenen Lastsenkung. Erst wenn der Vergleicher-Baustein 88 zu einem Zeitpunkt t_{E1} (Fig. 6) erkennt, dass die Ist-Stromaufnahme Iᵢₛₜ einen Referenzwert I_{ref}(n_{laden}) unterschritten hat, wird die Soll-Drehzahl auf die Prüfdrehzahl n_{prüf} reduziert. Die Drehzahl-Reduzierung auf die Prüfdrehzahl n_{Prüf} erfolgt zum Zeitpunkt t_{E1} und ist mit einer weiteren Ist-Stromsenkung verbunden. Somit ergeben sich zwei Ist-Stromsenkungen, nämlich eine erste Stromsenkung aufgrund der Lastsenkung (bis zum Zeitpunkt t_{E1}) und eine zweite Stromsenkung aufgrund der Drehzahl-Reduzierung.

In dem vorangegangenen Vergleichsbeispiel der Steuereinrichtung 39 wird für den Fall, dass weder ein Druckspeicher-Ladebedarf noch ein Kühl- oder sonstiger Bedarf erkannt wird, der Elektromotor 57 mit einer Soll-Prüfdrehzahl n_{prüf} angesteuert. Die Soll-Prüfdrehzahl n_{prüf} ist so bemessen, dass eine zuverlässige Messung der Ist-Stromaufnahme Iᵢₛₜ und der Ist-Drehzahl nᵢₛₜ erfolgen kann. Nachteilig dabei ist, dass der Elektromotor 57 sowohl bei Nichtvorliegen eines Druckspeicher-Ladebedarf als auch bei Nichtvorliegen eines Kühl- oder sonstigen Bedarfs zumindest bei dieser Soll-Prüfdrehzahl n_{prüf} permanent betrieben werden muss, um eine Messfähigkeit der Ist-Stromaufnahme Iᵢₛₜ und der Ist-Drehzahl nᵢₛₜ des Elektromotors 57 zu gewährleisten.

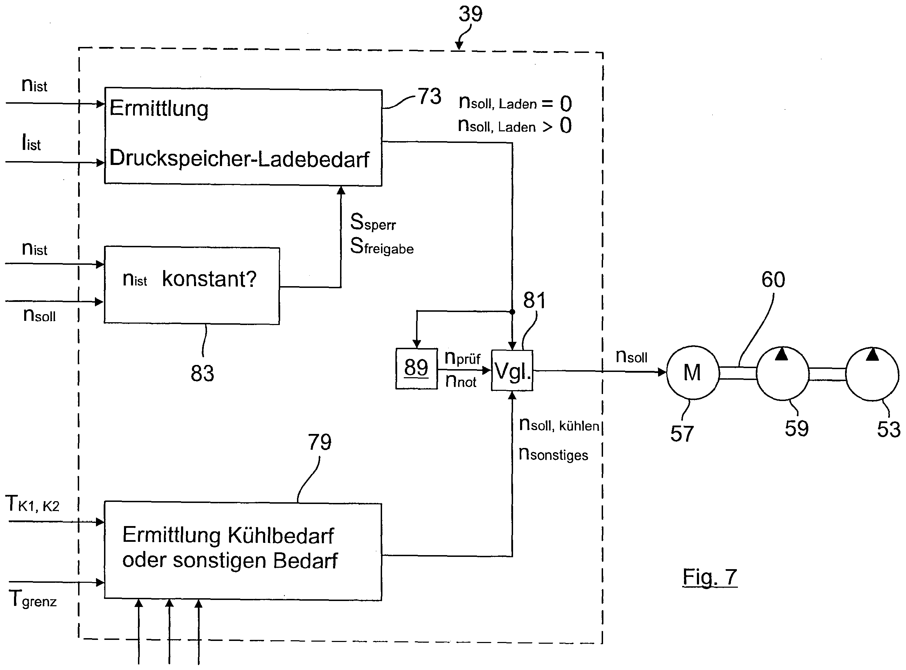

Demgegenüber ist in den Fig. 7, 8 und 9 eine Steuereinrichtung 39 gemäß dem Ausführungsbeispiel der Erfindung dargestellt. Der grundsätzliche Aufbau sowie die Funktionsweise dieser Steuereinrichtung 39 ist im Wesentlichen identisch mit dem vorangegangenen Vergleichsbeispiel. Insoweit wird auf die Vorbeschreibung Bezug genommen. Im Unterschied zum vorangegangenen Vergleichsbeispiel kann die Steuereinrichtung 39 gemäß den Fig. 7 bis 9 für den Fall, dass weder ein Druckspeicher-Ladebedarf noch ein Kühl- oder sonstiger Bedarf erkannt wird, die Solldrehzahl nₛₒₗₗ für eine vorgegebene Stillstand-Zeitdauer Δtₐᵤₛ (Fig. 9) bis auf Null absenken. Nach Ablauf dieser Stillstand-Zeitdauer Δtₐᵤₛ steuert die Steuereinrichtung 39 den Elektromotor 57 zumindest mit der Soll-Prüfdrehzahl n_{prüf} an, um die Messfähigkeit der Steuereinrichtung 39 wiederherzustellen.

Zur Ermittlung der Stillstand-Zeitdauer Δtₐᵤₛ weist die Steuereinrichtung 39 zusätzlich eine Druckmodell-Einheit 89 auf. Die Druckmodell-Einheit 89 ist gemäß der Fig. 7 beispielhaft signaltechnisch mit dem Signaleingang des Vergleicher-Bausteins 81 in Verbindung. Sofern die Stillstand-Bedingungen (das heißt es liegt weder ein Druckspeicher-Ladebedarf noch ein Kühl- und sonstiger Bedarf vor) erfüllt sind, setzt die Druckmodell-Einheit 89 die Solldrehzahl nₛₒₗₗ auf Null. Die Stillstand-Zeitdauer Δtₐᵤₛ startet zum Endzeitpunkt t_{E} des Ladebetriebs (das heißt zu dem Zeitpunkt, zu dem das Steuerventil 71 selbsttätig von der Ladestellung L in die Kühlstellung bzw. Nicht-Ladestellung K schaltet).

In der Druckmodell-Einheit 89 wird gemäß der Fig. 8 der zeitliche Verlauf des Speicherdruckes p_{S}(t) während der gesamten Betriebszeit nachgebildet. Hierzu erfasst die Druckmodell-Einheit 89 jedes für den Druckverlauf im Hochdruckkreislauf H relevante Ereignis, das zu einer Erhöhung (das heißt in der Fig. 8 die Teildruckdifferenzen Δp_{y}) oder zu einer Reduzierung (das heißt in der Fig. 8 die Teildruckdifferenzen Δpₓ) des Speicherdruckes p_{S} führt. Je nach Ereignis weisen die Teildruckdifferenzen positive oder negative Vorzeichen auf. Die Teildruckdifferenzen Δpₓ sind beispielhaft mit Aktuator-Betätigungen verknüpft. Jeder dieser Aktuator-Betätigungen wird eine Teildruckdifferenz Δpₓ₁, Δpₓ₂, ... zugeordnet (Fig. 8 oder 9). Die in den Fig. 8 und 9 beispielhaft gezeigten Teildruckdifferenzen Δpₓ₁, Δpₓ₂, ... korrelieren jeweils mit den, mit den Aktuator-Betätigungen verbundenen Hydraulikflüssigkeits-Entnahmen aus dem Hochdruckkreislauf H. Zudem wird in dem nachgebildeten zeitlichen Verlauf des Speicherdruckes p_{S}(t) auch der Druckverlust Δp_{xB} aufgrund von permanenter Basisleckage berücksichtigt.

Der Initialwert des zeitlichen Speicherdruck-Verlaufes entspricht gemäß den Fig. 8 oder 9 dem bereits erwähnten oberen Schwellwert p_{S,oben} des Steuerventiles 71. Bei Erreichen eines Mindestdruckes pₘᵢₙ endet die Stillstand-Zeitdauer Δtₐᵤₛ, so dass die Steuereinrichtung 39 den Elektromotor 57 mit der Prüfdrehzahl n_{prüf} ansteuert. Anschließend erfolgt mit Hilfe der Auswerteeinheit 73 eine Bestimmung, ob ein Druckspeicher-Ladebedarf vorliegt oder nicht. Die Bestimmung des Druck-Ladebedarfes erfolgt jedoch nur dann, wenn die Drehzahlkonstanz-Bedingungen erfüllt sind. Für eine aussagekräftige Messung der Ist-Stromaufnahme ist es zudem von Vorteil, wenn eine gewisse Mindest-Meßzeit (Meßfenster) vorliegt, in der die Konstanzbedingungen erfüllt.

In der Fig. 8 wird mit Hilfe eines Programmbausteins 90 der Druckmodell-Einheit 89 der Umschaltzeitpunkt t_{E} erkannt, zu dem das Steuerventil 71 von seiner Ladestellung L in seine Nichtladestellung/Kühlstellung K geschaltet wird. Die Erkennung des Umschaltzeitpunktes t_{E} erfolgt durch einen Prüfen der aktuell vorliegenden Lade-Solldrehzahl n_{soll,laden} und der zu einem vorangegangenen Meßzeitpunkt vorliegenden Lade-Solldrehzahl n_{soll,laden,n-1}. Sofern die im Programmbaustein 90 niedergelegten Bedingungen (das heißt sowohl n_{soll,laden,n-1} ≠0 als auch n_{soll,laden} =0) erfüllt sind erfolgt eine Initialisierung, bei der der im Druckmodell nachgebildete zeitliche Speicherdruck-Verlauf p_{S}(t) automatisch wieder auf seinen Initialwert zurückgesetzt, das heißt auf den oberen Schwellwert p_{S,oben}. wie es auch in dem Diagramm der Fig. 9 mit der Speicherdruck-Ladekurve zwischen den Zeitpunkten t_{A} und t_{E} dargelegt ist.

Wie oben erwähnt, wird der Speicherdruck p_{S} im Betrieb aufgrund von zum Beispiel Basisleckage-Druckverlusten Δp_{B} sowie Druckverlusten Δpₓ₁, Δpₓ₂, ... aufgrund von Aktuator-Betätigungen reduziert. Speziell die Basisleckage-Druckverluste sorgen für eine kontinuierliche Reduzierung mit im Wesentlichen konstanter Steigung α (Fig. 8 oder 9) des Speicherdruck-Verlaufes p_{S}(t). Vor diesem Hintergrund kann die Steigung α aufgrund von Basisleckage wie folgt näherungsweise ermittelt werden: Zunächst wird ein Zeitintervall Δt_{kühlen} (Fig. 9) zwischen dem Endzeitpunkt t_{E} eines Ladebetriebs und dem Anfangszeitpunkt t_{A} eines darauffolgenden Ladebetriebs (das heißt der Zeitraum zwischen zwei erkannten Ladebedarfen) erfasst. Anschließend wird die Druckdifferenz zwischen dem oberen Schwellwert p_{S,oben} und dem unteren Schwellwert p_{S,unten} des Steuerventils 71 unter Berücksichtigung der in dem Zeitintervall Δt_{kühlen} aufgetretenen Teildruckdifferenzen Δp_{y} oder Δpₓ des Speicherdruckes p_{S} ermittelt. Daraus kann in einfacher Weise die Steigung a erfasst werden, wodurch die Nachbildung des zeitlichen Speicherdruck-Verlaufes optimiert werden kann. Der Speicherdruck pₛ ist stark temperaturabhängig. Es ist daher für eine realitätsgetreue Nachbildung bevorzugt, wenn die Nachbildung des zeitlichen Speicherdruck-Verlaufes unter Berücksichtigung dieser starken Temperaturabhängigkeit durchgeführt wird.

## Patentansprüche

1. Hydrauliksystem für ein Doppelkupplungsgetriebe eines Kraftfahrzeugs, mit einem Hochdruckkreislauf (H), in dem ein Druckspeicher (25), zumindest eine Kupplung (K1, K2) sowie Aktuatoren (22) geschaltet sind, und mit einem Niederdruckkreislauf (N) zum Kühlen der Kupplung (K1, K2), wobei der Hochdruckkreislauf (H) und der Niederdruckkreislauf (N) jeweils eine Kühl-Hydraulikpumpe (59) und eine Lade-Hydraulikpumpe (53) aufweisen, die über einen gemeinsamen Elektromotor (57) antreibbar sind, und mit einer Steuereinrichtung (39), die bei Erkennen eines Druckspeicher-Ladebedarfs den Elektromotor (57) mit einer Lade-Solldrehzahl (n_{soll,laden}) ansteuert und/oder bei Erkennen eines Kühl-oder sonstigen Bedarfs den Elektromotor (57) mit einer Kühl- oder sonstigen Solldrehzahl (n_{soll,kühlen}) ansteuert, wobei die Steuereinrichtung (39) bei Nichtvorliegen sowohl eines Druckspeicher-Ladebedarfs als auch eines Kühl- oder sonstigen Bedarfs die Solldrehzahl (nₛₒₗₗ) für eine vorgegebene Zeitdauer (Δtₐᵤₛ) auf Null absenkt, und nach Ablauf der Zeitdauer (Δtₐᵤₛ) die Steuereinrichtung (39) den Elektromotor (57) zumindest mit einer Prüfdrehzahl (n_{prüf}) ansteuert, **dadurch gekennzeichnet, dass** die Steuereinrichtung (39) zur Ermittlung der Stillstand-Zeitdauer (Δtₐᵤₛ), eine Druckmodell-Einheit (89) aufweist, die die Aktuator-Betätigungen oder sonstige, den Speicherdruck (pₛ) beeinflussende Ereignisse während der gesamten Betriebszeit erfasst und in Abhängigkeit davon Teildruckdifferenzen (Δpₓ₁, Δpₓ₂, ... oder Δp_{y1}, Δp_{y2....}) generiert, die zum Beispiel mit der, mit der Aktuator-Betätigung verbundenen Hydraulikflüssigkeits-Entnahme aus dem Hochdruckkreislauf (H) korrelieren, und dass die Druckmodell-Einheit (89) den zeitlichen Speicherdruck-Abbau (p_{S}(t)) während der Stillstand-Zeitdauer (Δtₐᵤₛ) auf der Grundlage der erfassten Teildruckdifferenzen (Δpₓ₁, Δpₓ₂, ... oder Δp_{y1}, Δp_{y2...}) nachbildet, dass bei Erreichen eines Mindestdruckes (pₘᵢₙ) im Druckmodell die Steuereinrichtung (39) den Elektromotor (57) mit der Prüfdrehzahl (n_{prüf}) ansteuert, und dass die Druckmodell-Einheit (89) den zeitlichen Speicherdruck-Abbau (p_{S}(t)) zusätzlich auf der Grundlage eines Basisleckage-Druckverlusts (Δp_{B}) nachbildet.

2. Hydrauliksystem nach Anspruch 1, **dadurch gekennzeichnet, dass** in einem Nicht-Ladebetrieb, insbesondere einem Kühlbetrieb, sowohl die Kühl-Hydraulikpumpe (59) als auch die Lade-Hydraulikpumpe (53) strömungstechnisch mit dem Niederdruckkreislauf (N) verbunden sind, und die Lade-Hydraulikpumpe (53) vom Hochdruckkreislauf (H) entkoppelt ist, und dass im Nicht-Ladebetrieb die Hydraulikpumpen (53, 59) bei geringer Pumpenlast sowie geringer Ist-Stromaufnahme arbeiten.

3. Hydrauliksystem nach einem der vorhergehenden Ansprüche, **dadurch gekennzeichnet, dass** in einem Ladebetrieb die Lade-Hydraulikpumpe (53) mit dem Hochdruckkreislauf (H) strömungstechnisch gekoppelt ist, und dass die Lade-Hydraulikpumpe (53) bei hoher Pumpenlast mit großer Ist-Stromaufnahme arbeitet.

4. Hydrauliksystem nach einem der vorhergehenden Ansprüche, **dadurch gekennzeichnet, dass** der Hochdruckkreislauf (H) und der Niederdruckkreislauf (N) über eine Bypassleitung (67) mit integriertem Steuerventil (71) verbunden ist, und dass das Steuerventil (71) in Abhängigkeit von dem Speicherdruck (p_{S}) im Hochdruckkreislauf (H) ohne weitere Fremdenergie, das heißt selbsttätig, zwischen einer Ladestellung (L), in der das Hydrauliksystem im Ladebetrieb arbeitet, und einer Nicht-Ladestellung, insbesondere einer Kühlstellung, (K), in der das Hydrauliksystem im Nicht-Ladebetrieb, insbesondere einem Kühlbetrieb, arbeitet, verstellbar ist.

5. Hydrauliksystem nach Anspruch 4, **dadurch gekennzeichnet, dass** sich das Steuerventil (71) selbsttätig in eine. Ladestellung (L) verstellt, wenn der Speicherdruck (p_{S}) im Hochdruckkreislauf (H) einen unteren Schwellwert (p_{S,unten}) unterschreitet, und dass sich das Steuerventil (71) selbsttätig in seine Nicht-Ladestellung, insbesondere seine Kühlstellung, (K) verstellt, wenn der Speicherdruck (p_{S}) im Hochdruckkreislauf (H) einen oberen Schwellwert (p_{S,oben}) überschreitet.

6. Hydrauliksystem nach Anspruch 5, **dadurch gekennzeichnet, dass** zu einem Ladebetrieb-Endzeitpunkt (t_{E}) der Speicherdruck (p_{S}) in dem Hochdruckkreislauf (H) dem oberen Schwellwert (p_{S,oben}) entspricht, und dass bei Überschreiten des oberen Schwellwerts (P_{s,oben}) das Steuerventil (71) in der Bypassleitung (67) selbsttätig von der Ladestellung (L) in die Kühlstellung (K) verstellt wird, und dass der obere Schwellwert (p_{S,oben}) ein Initialdruck des Druckmodells ist, von dem die Teildruckdifferenzen (Δpₓ₁, Δpₓ₂, ... oder Δp_{y1}, Δp_{y2}) aufgrund von zum Beispiel Aktuator-Betätigungen und gegebenenfalls aufgrund von Basisleckage (Δp_{B}), abgezogen oder aufaddiert werden.

7. Hydrauliksystem nach einem der vorhergehenden Ansprüche, **dadurch gekennzeichnet, dass** der temperaturabhängige Speicherdruck (p_{S}) im Hochdruckkreislauf (H) aufgrund von Basisleckage-Druckverlusten (Δp_{B}) kontinuierlich reduziert wird, und dass der Speicherdruck (p_{S}) aufgrund einer Aktuatoren-Betätigung schlagartig reduziert wird.

8. Hydrauliksystem nach Anspruch 7, **dadurch gekennzeichnet, dass** die Druckmodell-Einheit (89) zur Nachbildung des zeitlichen Speicherdruck-Abbaus (p_{S}(t)) die Steigung (a) aufgrund der Basisleckage-Druckverluste (Δp_{B}) abschätzt oder ermittelt.

9. Hydrauliksystem nach Anspruch 8, **dadurch gekennzeichnet, dass** die Druckmodell-Einheit (89) die Steigung (a) berechnet, und zwar aus dem Zeitintervall (Δt_{kühlen}) zwischen dem Ladebetrieb-Endzeitpunkt (t_{E}) und dem darauffolgenden Ladebetrieb-Anfangszeitpunkt (t_{A}) und aus der Druckdifferenz zwischen dem oberen Schwellwert (p_{s,oben}) und dem unteren Schwellwert (p_{S,unten}) des Steuerventils (71) unter Berücksichtigung der in dem Zeitintervall (Δt_{kühlen}) aufgetretenen Teildruckdifferenzen (Δpₓ₁, Δpₓ₂, ... oder Δp_{y1}, Δp_{y2}).

10. Hydrauliksystem nach einem der vorhergehenden Ansprüche, **dadurch gekennzeichnet, dass** die für das Erkennen eines Druckspeicher-Ladebedarfs dem Elektromotor (57) eine Strommesseinrichtung (75) zur Erfassung einer Ist-Stromaufnahme (Iᵢₛₜ) und ein Drehzahlsensor (77) zur Erfassung einer Ist-Drehzahl (nᵢₛₜ) zugeordnet ist, und dass die Steuereinrichtung (39) eine Auswerteeinheit (73) aufweist, die auf der Grundlage der Ist-Stromaufnahme (Iᵢₛₜ) und der Ist-Drehzahl (nist), und zwar aus dem Vergleich der Ist-Stromaufnahme (Iᵢₛₜ) mit einem Referenzwert (I_{ref}), einen Druckspeicher-Ladebedarf erkennt.

11. Hydrauliksystem nach Anspruch 10, **dadurch gekennzeichnet, dass** die Steuereinrichtung (39) eine Drehzahlkonstanz-Einheit (83) aufweist, die erfasst, ob die Hydraulikpumpen (59, 53) mit konstanter Ist-Drehzahl laufen, und dass bei Nichtvorliegen einer konstanten Ist-Drehzahl (nᵢₛₜ) die Auswerteeinheit (73) deaktiviert ist sowie bei Vorliegen einer konstanten Ist-Drehzahl die Auswerteeinheit (73) aktiviert ist, wobei für den Fall, dass keine Referenz vorliegt, eine Notdrehzahl (nₙₒₜ) und eine Ladedrehzahl als Mindestdrehzahl verwendbar sind.

12. Hydrauliksystem nach Anspruch 11, **dadurch gekennzeichnet, dass** bei Erfüllen der folgenden Kriterien eine Drehzahlkonstanz festgestellt ist, wonach der Solldrehzahlgradient (ṅₛₒₗₗ) gleich Null ist, der gefilterte Solldrehzahlgradient (ṅₛₒₗₗ,_{Filter}) kleiner als ein Schwellwert (x₁) ist und der Ist-Drehzahlgradient (ṅᵢₛₜ) kleiner als ein Schwellwert (x₂) ist.

13. Hydrauliksystem nach einem der vorhergehenden Ansprüche, **dadurch gekennzeichnet, dass** ein Referenzwert (I_{ref}) zum Erkennen des Druckspeicher-Ladebedarf aus einem in der Steuereinrichtung (39) hinterlegten Referenz-Polynom (P) ermittelbar ist, und zwar in Abhängigkeit von der Ist-Drehzahl.

14. Hydrauliksystem nach Anspruch 13, **dadurch gekennzeichnet, dass** das Referenz-Polynom (P) in einer Initialisierungsphase generierbar ist, und dass in der Initialisierungsphase entweder durchgängig in einem Ladebetrieb-Zeitintervall oder durchgängig in einem Nicht-Ladebetrieb-Zeitintervall bei unterschiedlichen Ist-Drehzahlen und gegebenenfalls unterschiedlichen Temperaturen die korrespondierenden Ist-Stromaufnahmen als Referenzwerte erfasst und gespeichert werden.

15. Hydrauliksystem nach einem der vorhergehenden Ansprüche, **dadurch gekennzeichnet, dass** die Steuereinrichtung (39) eine Auswerteeinheit (73) zum Erkennen eines Druckspeicher-Ladebedarfs aufweist, in welcher Auswerteeinheit (73) aus einem Vergleich der Ist-Stromaufnahme (Iᵢₛₜ) und einem gefilterten Wert (I_{ist,Filter}) der Ist-Stromaufnahme (Iᵢₛₜ) ein Druckspeicher-Ladebedarf erkennbar ist.

16. Hydrauliksystem nach Anspruch 15, **dadurch gekennzeichnet, dass** die Steuereinrichtung (39) eine Drehzahlkonstanz-Einheit (83) aufweist, die erfasst, ob die Hydraulikpumpen (53, 59) bei einer konstanten Drehzahl laufen, und dass bei Vorliegen einer konstanten Drehzahl die Auswerteeinheit (73) aktiviert ist, und bei Nichtvorliegen einer konstanten Drehzahl deaktiviert ist.

17. Hydrauliksystem nach Anspruch 15 oder 16, **dadurch gekennzeichnet, dass** nach erfolgter Generierung des Referenz-Polynoms (P) der Druckspeicher-Ladebedarf aus dem Vergleich der Ist-Stromaufnahme (Iᵢₛₜ) und dem korrespondierenden Referenzwert (I_{ref}) erkennbar ist.

18. Hydrauliksystem nach einem der vorhergehenden Ansprüche, **dadurch gekennzeichnet, dass** bei Nichtvorliegen sowohl eines Kühl- oder sonstigen Bedarfs als auch bei Nichtvorliegen eines Ladebedarfs die Steuereinrichtung (39) den Elektromotor (57) mit einer im Vergleich zur Lade-Solldrehzahl (n_{Soll, Laden}) und zur Kühl-Solldrehzahl (n_{Soll, Kühlen}) reduzierter Prüfdrehzahl (n_{prüf}) ansteuert, mit der die Erfassung der Ist-Drehzahl (nᵢₛₜ) und Ist-Stromaufnahme (Iᵢₛₜ) gewährleistet ist.

## Claims

1. Hydraulic system for a dual-clutch transmission of a motor vehicle, with a high-pressure circuit (H) in which are arranged a pressure accumulator (25), at least one clutch (K1, K2) and also actuators (22), and with a low-pressure circuit (N) for cooling the clutch (K1, K2), wherein the high-pressure circuit (H) and the low-pressure circuit (N) respectively comprise a cooling hydraulic pump (59) and a charging hydraulic pump (53), which can be driven via a common electric motor (57), and with a control device (39) that on recognition of a requirement to charge the pressure accumulator controls the electric motor (57) to run at a charging setpoint speed (n_{desired, loading}) and/or on recognition of a cooling or other requirement controls the electric motor (57) to run at a cooling or other setpoint speed (n_{desired,cooling}), wherein the control device (39) in the absence of a pressure accumulator charging requirement and also in the absence of a cooling or other requirement lowers the setpoint speed **(n_{desired})** to zero for a predetermined period of time (Δtₒᵤₜ), and after expiry of the period of time (Δtₒᵤₜ) the control device (39) controls the electric motor (57) at least with a test speed (nₜₑₛₜ), **characterised in that** the control device (39) comprises for the determination of the standstill period of time (Δtₒᵤₜ) a pressure model unit (89) that during the entire operating time detects actuations of the actuator or other events influencing the accumulator pressure (pₛ), and depending on these generates partial pressure differences (Δpₓ₁, Δpₓ₂ ..... or Δp_{y1}, Δp_{y2}) that for example correlate with the removal of hydraulic fluid from the high-pressure circuit (H) that is connected with the actuation of the actuator, and that the pressure modelling unit (89) models the pressure decrease (pₛ(t)) of the pressure accumulator over time during the standstill period of time (Δtₒᵤₜ) based on the detected partial pressure differences (Δpₓ₁, Δpₓ₂... or Δp_{y1}, Δp_{y2}), that when a minimum pressure (pₘᵢₙ) is reached in the pressure model the control device (39) controls the electric motor (57) with the test speed (nₜₑₛₜ), and that the pressure model unit (89) models the pressure decrease (p ₛ(t)) of the pressure accumulator over time in addition on the basis of a basic leakage pressure loss (Δp_{B}).

2. Hydraulic system according to claim 1, **characterised in that** in a non-charging operation, in particular a cooling operation, the cooling hydraulic pump (59) and also the charging hydraulic pump (53) are fluidly connected to the low-pressure circuit (N), and the charging hydraulic pump (53) is decoupled from the high-pressure circuit (H), and that in the non-charging operation the hydraulic pumps (53, 59) operate at a low pump load and also at a low actual current consumption.

3. Hydraulic system according to any one of the preceding claims, **characterised in that** in a charging operation the charging hydraulic pump (53) is fluidly connected to the high-pressure circuit (H), and that the charging hydraulic ump (53) operates at a high pump load with high actual current consumption.

4. Hydraulic system according to any one of the preceding claims, **characterised in that** the high-pressure circuit (H) and the low-pressure circuit (N) are connected via a bypass line (67) to an integrated control valve (71), and that the control valve (71) operates depending on the accumulator pressure (pₛ) in the high-pressure circuit (H) without external energy input, in other words automatically, between a charging position (L), in which the hydraulic system operates in the charging mode, and a non-charging position (K), in particular a cooling position, in which the hydraulic system operates in the non-charging mode, in particular in a cooling mode.

5. Hydraulic system according to claim 4, **characterised in that** the control valve (71) automatically adjusts to a charging position when the accumulator pressure (pₛ) in the high-pressure circuit (H) falls below a lower threshold value (pₛ, _{lower}), and that the control valve (71) automatically adjusts to its non-charging position, in particular its cooling position (K), when the accumulator pressure (pₛ) in the high-pressure circuit (H) exceeds an upper threshold value (p_{s, upper}).

6. Hydraulic system according to claim 5, **characterised in that** at a charging mode end time point (t_{E}) the accumulator pressure (pₛ) in the high-pressure circuit (H) corresponds to the upper threshold value (P_{s, upper}), and that when the upper threshold value (P_{s, upper}) is exceeded the control valve (71) in the bypass line (67) is automatically adjusted from the charging position (L) to the cooling position (K), and that the upper threshold value (P_{s, upper}) is an initial pressure of the pressure model, from which the partial pressure differences (Δp_{x1,} Δpₓ₂, ...or Δp_{y1,} Δp_{y2} ...) are subtracted or added on the basis of for example actuations of the actuator and if necessary on the basis of basic leakage (Δp_{B}).

7. Hydraulic system according to any one of the preceding claims, **characterised in that** the temperature-dependent accumulator pressure (pₛ) in the high-pressure circuit (H) is continuously reduced on account of basic leakage pressure losses (Δp_{B}), and that the accumulator pressure (pₛ) is abruptly reduced on account of an actuator actuation.

8. Hydraulic system of claim 7, **characterised in that** the pressure model unit (89) for modelling the decrease of the accumulator pressure over time (pₛ(t)) estimates or determines the gradient (σ) due to the basic leakage pressure losses (Δp_{B}).

9. Hydraulic system according to claim 8, **characterised in that** the pressure model unit (89) calculates the gradient (σ), and specifically from the time interval (Δt_{cooling}) between the charging mode end time point (t_{E}) and the following charging mode starting time point (t_{A}) and from the pressure difference between the upper threshold value (P_{s, upper}) and the lower threshold value (p_{s,lower}) of the control valve (71), taking into account the partial pressure differences (Δpₓ₁, Δpₓ₂,... or Δp_{y1,} Δp_{y2}) that have occurred in the time interval (Δt_{cooling}).

10. Hydraulic system according to any one of the preceding claims, **characterised in that** for the recognition of a pressure accumulator charging requirement a current measuring device (75) for detecting an actual current consumption (I_{actual}) is associated with the electric motor (57) and a speed sensor (77) for detecting an actual speed (n_{actual}) is associated with the electric motor (57), and that the control device (39) has an evaluation unit (73) that recognises, on the basis of the actual current consumption (I_{actual}) and the actual speed (n_{actual}) and specifically from the comparison of the actual current consumption (I_{actual}) with a reference value (I_{ref}), a pressure accumulator charging requirement.

11. Hydraulic system according to claim 10, **characterised in that** the control device (39) comprises a constant-speed unit (83), which detects whether the hydraulic pumps (59, 53) is running at a constant actual speed, and that in the absence of a constant actual speed (n_{actual}) the evaluation unit (73) is deactivated and also in the case of the existence of a constant actual speed the evaluation unit (73) is activated, wherein in the case that no reference exists, an emergency speed (nₑₘₑᵣ) and a charging speed can be used as minimum speed.

12. Hydraulic system according to claim 11, **characterised in that** when the following criteria are met a constant speed is established, after which the setpoint speed gradient (n_{desired}) is equal to zero, the filtered setpoint speed gradient (n_{desired,filter}) is smaller than a threshold value (x₁), and the actual speed gradient (n_{actual}) is smaller than a threshold value (x₂).

13. Hydraulic system according to any one of the preceding claims, **characterised in that** a reference value (I_{ref}) for recognising the requirement for charging the pressure accumulator can be determined from a reference polynomial (P) stored in the control device (39), and in particular depending on the actual speed.

14. Hydraulic system according to claim 13, **characterised in that** the reference polynomial (P) can be generated in an initialisation phase, and that in the initialisation phase, either continuously in a charging mode time interval or continuously in a non-charging mode time interval at different actual speeds and optionally different temperatures, the corresponding actual current consumptions are detected as reference values and are stored.

15. Hydraulic system according to any one of the previous claims, **characterised in that** the control device (39) has an evaluation unit (73) for recognising a requirement for charging the pressure accumulator, in which evaluation unit (73) a pressure accumulator charging requirement can be recognised from a comparison of the actual current consumption (I_{actual}) and a filtered value (I_{actual,filter}) of the actual current consumption (I_{actual}).

16. Hydraulic system according to claim 15, **characterised in that** the control device (39) has a constant-speed unit (83), which detects whether the hydraulic pumps (53, 59) are running at a constant speed, and that with the existence of a constant speed the evaluation unit (73) is activated, and in the absence of a constant speed the evaluation unit is deactivated.

17. Hydraulic system according to claim 15 or 16, **characterised in that** after successful generation of the reference polynomial (P) the requirement for charging the pressure accumulator is recognisable from a comparison of the actual current consumption (I_{actual}) and the corresponding reference value (I_{ref}).

18. Hydraulic system according to any one of the preceding claims, **characterised in that** in the absence of a requirement for cooling or other requirement and also in the absence of a requirement for charging, the control device (39) controls the electric motor (57) with a reduced test speed (nₜₑₛₜ) compared to the charging setpoint speed (n_{desired, loading}) and the cooling setpoint speed (n_{desired, cooling}), with which the detection of the actual speed (n_{actual}) and actual current consumption (I_{actual}) is ensured.

## Revendications

1. Système hydraulique pour une boîte de vitesses à double embrayage d'un véhicule automobile, avec un circuit haute pression (H), dans lequel un accumulateur de pression (25), au moins un embrayage (K1, K2) et des actionneurs (22) sont montés, et avec un circuit basse pression (N) pour le refroidissement de l'embrayage (K1, K2), dans lequel le circuit haute pression (H) et le circuit basse pression (N) présentent respectivement une pompe hydraulique de refroidissement (59) et une pompe hydraulique de charge (53) qui peuvent être entraînées par le biais d'un moteur électrique (57) commun, et avec un dispositif de commande (39) qui commande lors de la reconnaissance d'un besoin en charge d'accumulateur de pression le moteur électrique (57) avec une vitesse de rotation de consigne de charge (n_{consigne}, charge) et/ou commande lors de la reconnaissance d'un besoin en refroidissement ou autre le moteur électrique (57) avec une vitesse de rotation de consigne de refroidissement (n_{consigne}, refroidissement) ou autre, dans lequel le dispositif de commande (39) abaisse à zéro en cas de non-présence non seulement d'un besoin en charge d'accumulateur de pression mais aussi d'un besoin en refroidissement ou autre la vitesse de rotation de consigne (n_{consigne}) pour une durée (Δt_{arrêt}) prédéfinie, et après l'expiration de la durée (Δt_{arrêt}) le dispositif de commande (39) commande le moteur électrique (57) au moins avec une vitesse de rotation de vérification (n_{vérification}), **caractérisé en ce que** le dispositif de commande (39) présente pour la détermination de la durée d'arrêt (Δt_{arrêt}) une unité de modèle de pression (89) qui détecte les actionnements d'actionneur ou autres, des événements influençant la pression d'accumulateur (pₛ) pendant le temps de fonctionnement entier et génère en fonction de cela des différences de pression partielle (Δpₓ₁, Δpₓ₂, ... ou Δp_{y1}, Δp_{y2}...) qui sont en corrélation par exemple avec le prélèvement de liquide hydraulique, relié à l'actionnement d'actionneur, du circuit haute pression (H), et que l'unité de modèle de pression (89) reproduit la réduction de pression d'accumulateur (pₛ(t)) temporelle pendant la durée d'arrêt (Δt_{arrêt}) sur la base des différences de pression partielle (Δpₓ₁, Δpₓ₂, ... ou Δp_{y1}, Δp_{y2}...) détectées, que lors de l'atteinte d'une pression minimale (pₘᵢₙ) dans le modèle de pression le dispositif de commande (39) commande le moteur électrique (57) avec la vitesse de rotation de vérification (n_{vérification}), et que l'unité de modèle de pression (89) reproduit la réduction de pression d'accumulateur p_{Ps}(t)) temporelle en outre sur la base d'une perte de pression de fuite de base (Δp_{B}).

2. Système hydraulique selon la revendication 1, **caractérisé en ce que** dans un mode de non-charge, en particulier un mode de refroidissement, non seulement la pompe hydraulique de refroidissement (59) mais aussi la pompe hydraulique de charge (53) sont reliées en écoulement au circuit basse pression (N), et la pompe hydraulique de charge (53) est découplée du circuit haute pression (H), et qu'en mode de non-charge les pompes hydrauliques (53, 59) travaillent en cas de faible charge de pompe et de faible consommation de courant réelle.

3. Système hydraulique selon l'une quelconque des revendications précédentes, **caractérisé en ce que** dans un mode de charge la pompe hydraulique de charge (53) est couplée en écoulement au circuit haute pression (H), et que la pompe hydraulique de charge (53) travaille en cas de charge de pompe élevée avec une grande consommation de courant réelle.

4. Système hydraulique selon l'une quelconque des revendications précédentes, **caractérisé en ce que** le circuit haute pression (H) et le circuit basse pression (N) sont reliés par le biais d'un conduit de dérivation (67) avec soupape de commande (71) intégrée, et que la soupape de commande (71) est réglable en fonction de la pression d'accumulateur (pₛ) dans le circuit haute pression (H) sans autre énergie externe, c'est-à-dire automatiquement, entre une position de charge (L) dans laquelle le système hydraulique travaille dans le mode de charge, et une position de non-charge, en particulier une position de refroidissement (K) dans laquelle le système hydraulique travaille en mode de non-charge, en particulier un mode de refroidissement.

5. Système hydraulique selon la revendication 4, **caractérisé en ce que** la soupape de commande (71) se règle automatiquement dans une position de charge (L) si la pression d'accumulateur (pₛ) dans le circuit haute pression (H) n'atteint pas une valeur seuil inférieure (pₛ, _{bas}), et que la soupape de commande (71) se règle automatiquement dans sa position de non-charge, en particulier sa position de refroidissement (K) si la pression d'accumulateur (pₛ) dans le circuit haute pression (H) dépasse une valeur seuil supérieure (p_{s,haut}).

6. Système hydraulique selon la revendication 5, **caractérisé en ce qu'**à un moment final de mode de charge (t_{E}) la pression d'accumulateur (pₛ) dans le circuit haute pression (H) correspond à la valeur seuil supérieure (p_{s, haut}), et qu'en cas de dépassement de la valeur seuil supérieure (P_{s, haut}) la soupape de commande (71) dans la conduite de dérivation (67) est réglée automatiquement de la position de charge (L) à la position de refroidissement (K), et que la valeur seuil supérieure (p_{s, haut}) est une pression initiale du modèle de pression, de laquelle les différences de pression partielle (Δpₓ₁. Δpₓ₂, ... ou Δp_{y1}, Δp_{y2}...) sont retirées ou ajoutées en raison d'actionnements d'actionneur par exemple et éventuellement en raison de fuite de base (Δp_{B}).

7. Système hydraulique selon l'une quelconque des revendications précédentes, **caractérisé en ce que** la pression d'accumulateur (pₛ) dépendant de la température dans le circuit haute pression (H) est réduite en continu en raison des pertes de pression de fuite de base (Δp_{B}), et que la pression d'accumulateur (pₛ) est réduite brusquement en raison d'un actionnement d'actionneur.

8. Système hydraulique selon la revendication 7, **caractérisé en ce que** l'unité de modèle de pression (89) évalue ou détermine pour la reproduction de la réduction de pression d'accumulateur (pₛ(t)) temporelle la pente (a) en raison des pertes de pression de fuite de base (Δp_{B}).

9. Système hydraulique selon la revendication 8, **caractérisé en ce que** l'unité de modèle de pression (89) calcule la pente (a) et ce à partir de l'intervalle de temps (Δt_{refroidissement}) entre le moment final de mode de charge (t_{E}) et le moment de début de mode de charge (t_{A}) consécutif et à partir de la différence de pression entre la valeur seuil supérieure (P_{s, haut}) et la valeur seuil inférieure (p_{s, bas}) de la soupape de commande (71) en tenant compte des différences de pression partielle (Δpₓ₁, Δpₓ₂, ... ou Δp_{y1}, Δp_{y2}...) survenues dans l'intervalle de temps (Δt_{refroidissement}).

10. Système hydraulique selon l'une quelconque des revendications précédentes, **caractérisé en ce que** pour la reconnaissance d'un besoin en charge d'accumulateur de pression sont associés au moteur électrique (57) un dispositif de mesure de courant (75) pour la détection d'une consommation de courant réelle (I_{réelle}) et un capteur de vitesse de rotation (77) pour la détection d'une vitesse de rotation réelle (n_{réelle}), et que le dispositif de commande (39) présente une unité d'évaluation (73) qui reconnaît sur la base de la consommation de courant réelle (I_{réelle}) et de la vitesse de rotation réelle (n_{réelle}), et ce à partir de la comparaison de la consommation de courant réelle (I_{réelle}) avec une valeur de référence (I_{ref}), un besoin en charge d'accumulateur de pression.

11. Système hydraulique selon la revendication 10, **caractérisé en ce que** le dispositif de commande (39) présente une unité de constance de vitesse de rotation (83) qui détecte si les pompes hydrauliques (59, 53) tournent avec une vitesse de rotation réelle constante, et qu'en cas de non-présence d'une vitesse de rotation réelle (n_{réelle}) constante, l'unité d'évaluation (73) est désactivée et en présence d'une vitesse de rotation réelle constante l'unité d'évaluation (73) est activée, dans lequel au cas où aucune référence n'est présente, une vitesse de rotation d'urgence (n_{urgence}) et une vitesse de rotation de charge peuvent être utilisées comme vitesse de rotation minimale.

12. Système hydraulique selon la revendication 11, **caractérisé en ce qu'**en cas de remplissage des critères suivants, une constance de vitesse de rotation est constatée, selon lesquels le gradient de vitesse de rotation de consigne (n_{consigne}) est égal à zéro, le gradient de vitesse de rotation de consigne filtré (n_{consigne, filtre}) est inférieur à une valeur seuil (x₁) et le gradient de vitesse de rotation réelle (n_{réelle}) est inférieur à une valeur seuil (x₂).

13. Système hydraulique selon l'une quelconque des revendications précédentes, **caractérisé en ce qu'**une valeur de référence (I_{ref}) peut être déterminée pour la reconnaissance du besoin en charge d'accumulateur de pression à partir d'un polynôme de référence (P) enregistré dans le dispositif de commande (39), et ce en fonction de la vitesse de rotation réelle.

14. Système hydraulique selon la revendication 13, **caractérisé en ce que** le polynôme de référence (P) peut être généré dans une phase d'initialisation et que dans la phase d'initialisation en continu dans un intervalle de temps de mode de charge ou en continu dans un intervalle de temps de mode de non-charge pour différentes vitesses de rotation réelles et éventuellement différentes températures les consommations de courant réelles correspondantes sont détectées et enregistrées comme valeurs de référence.

15. Système hydraulique selon l'une quelconque des revendications précédentes, **caractérisé en ce que** le dispositif de commande (39) présente une unité d'évaluation (73) pour la reconnaissance d'un besoin en charge d'accumulateur de pression, dans laquelle unité d'évaluation (73) à partir d'une comparaison de la consommation de courant réelle (I_{réelle}) et une valeur filtrée (I_{réelle}, filtre) de la consommation de courant réelle (I_{réelle}) un besoin en charge d'accumulateur de pression peut être reconnu.

16. Système hydraulique selon la revendication 15, **caractérisé en ce que** le dispositif de commande (39) présente une unité de constance de vitesse de rotation (83) qui détecte si les pompes hydrauliques (53, 59) tournent en cas de vitesse de rotation constante, et qu'en présence d'une vitesse de rotation constante, l'unité d'évaluation (73) est activée, et en cas de non-présence d'une vitesse de rotation constante est désactivée.

17. Système hydraulique selon la revendication 15 ou 16, **caractérisé en ce qu'**après la génération effectuée du polynôme de référence (P) le besoin en charge d'accumulateur de pression peut être reconnu à partir de la comparaison de la consommation de courant réelle (I_{réelle}) et la valeur de référence (I_{ref}) correspondante.

18. Système hydraulique selon l'une quelconque des revendications précédentes, **caractérisé en ce qu'**en cas de non-présence non seulement d'un besoin en refroidissement ou autre mais aussi en cas de non-présence d'un besoin en charge le dispositif de commande (39) commande le moteur électrique (57) avec une vitesse de rotation de vérification (n_{vérification}) réduite par rapport à la vitesse de rotation de consigne de charge (n_{consigne, charge}) et la vitesse de rotation de consigne de refroidissement (n_{consigne, refroidissement}), avec laquelle la détection de la vitesse de rotation réelle (n_{réelle}) et de la consommation de courant réelle (I_{réelle}) est garantie.
